(19) Europäisches Patentamt
European Patent Office
Office européen des brevets

(11) **EP 2 782 260 B1**

(12) **EUROPÄISCHE PATENTSCHRIFT**

(45) Veröffentlichungstag und Bekanntmachung des Hinweises auf die Patenterteilung:
**20.12.2017 Patentblatt 2017/51**

(51) Int Cl.:
*H04B 3/20* (2006.01)   *H04M 1/58* (2006.01)
*H04M 3/56* (2006.01)   *H04M 9/08* (2006.01)
*G10L 21/0216* (2013.01)   *G10L 21/0208* (2013.01)
*H04R 1/10* (2006.01)

(21) Anmeldenummer: **14000808.7**

(22) Anmeldetag: **06.03.2014**

(54) **Verfahren und Vorrichtung zur Steuerung einer Sprachkommunikation sowie Verwendung derselben**

Method and apparatus for controlling voice communication and use thereof

Procédé et dispositif de commande d'une communication vocale et utilisation de ceux-ci

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2013 DE 102013005049**

(43) Veröffentlichungstag der Anmeldung:
**24.09.2014 Patentblatt 2014/39**

(73) Patentinhaber: **Unify GmbH & Co. KG**
**80807 München (DE)**

(72) Erfinder: **Klug, Karl**
**83714 Miesbach (DE)**

(74) Vertreter: **Fritzsche, Thomas**
**Fritzsche Patent**
**Naupliastraße 110**
**81545 München (DE)**

(56) Entgegenhaltungen:
**EP-A1- 1 830 348        WO-A1-99/11045**
**US-A- 4 577 071         US-A- 5 825 897**
**US-A1- 2003 228 023     US-A1- 2004 052 358**
**US-A1- 2004 179 676     US-A1- 2007 053 505**
**US-A1- 2007 263 847     US-A1- 2010 322 430**
**US-A1- 2012 020 485     US-A1- 2012 308 024**
**US-B1- 7 769 187**

**Beschreibung**

Die vorliegende Erfindung betrifft ein Verfahren und eine Vorrichtung zur Steuerung einer Sprachkommunikation sowie deren Verwendung für eine Konferenzschaltung, für einen Kopf-oder Ohrhörer bzw. ein Headset.

Bei Sprachkommunikationsverfahren wie etwa einer Telefon-/Videokonferenz wie auch bei einer Verwendung eines Headsets an Mobiltelefonen oder dergleichen ist eine Sprachqualität ein wichtiges Auslegungskriterium.

Wenn man Konferenzteilnehmer hat, die sich in einer lauten Umgebung befinden, kann dies die Konferenz stören. Dies kann geschehen, wenn der Teilnehmer mit einem Mobiltelefon in der Öffentlichkeit an der Konferenz teilnimmt, aber auch Teilnehmer mit einer Kopfhörergarnitur in einer Konferenzumgebung können davon betroffen sein. Einerseits versteht der Teilnehmer in lauter Umgebung die Konferenz schlechter, andererseits werden die Umgebungsgeräusche an die anderen Konferenzteilnehmer mit übertragen. Zudem hört der Teilnehmer in der lauten Umgebung seine eigene Stimme nicht gut, sodass er lauter sprechen muss, um das Umweltgeräusch zu übertönen. Das kann zu wenigstens zwei weiteren Nachteilen führen. Zum einen kann durch das laute Sprechen zusätzlicher Lärm entstehen, der am Ort des Teilnehmers wie beispielsweise in einem Großraumbüro störend sein kann (in einer Umgebung mit vielen Konferenzteilnehmern kann das auch dazu führen, dass jeder den anderen zu übertönen versucht und sich der Geräuschpegel entsprechend aufschaukelt). Zum anderen ist es in öffentlich zugänglichen Gebäuden oder an öffentlich zugänglichen Plätzen schwierig, Vertrauliches und/oder Geschäftliches zu besprechen, da grundsätzlich jede Person, die sich in der Umgebung befindet, mithören kann. Eine Störung des Höreindrucks des Teilnehmers selbst kann auftreten, wenn die eigene Stimme von dem Konferenzsystem mit einer gewissen Zeitverzögerung (sog. "Round trip delay") zum Sprecher zurückkommt. Echo- und Halleffekte können beispielsweise erzeugt werden, wenn das eigene Sprachsignal auf der Seite des Konferenzsystems über einen Lautsprecher ausgegeben und ein dort vorhandenes Mikrofon wieder aufgenommen wird (akustischen Echo), oder können durch gleichzeitiges Senden und Empfangen von Signalen durch fernmeldetechnische Einrichtungen erzeugt werden (Duplex-Echo). Ein Echo und die daraus folgende Störung werden umso stärker, je lauter der Teilnehmer spricht.

Damit ein zu lautes Sprechen eines Teilnehmers andere Teilnehmer nicht zu sehr stört, ist es bekannt, die Signalstärke der Leitung durch einen Konferenzmoderator oder den Teilnehmer, der die laute Umgebung hat, von Hand abzusenken (sog. "muting"). Das ist oft ein iterativer Vorgang und kann mehrere bzw. ständige Anpassungen erforderlich machen.

Zur Handhabung störender Nebengeräusche ist es für Konferenzschaltungen beispielsweise bekannt, dass am Lautsprecher des Ohres das um 180° phasenverschobene Umgebungsgeräusch zusätzlich zum Konferenzsignal ausgegeben wird, was am Ohr zur Auslöschung des Umgebungsgeräusches führt. Ähnliche Lösungen sind auch für das Musikhören in einem Flugzeug oder in einem Eisenbahnwaggon bzw. für die Kopfhörer eines Flugzeug- oder Hubschrauberpiloten entwickelt worden. Im besten Falle hört man von der Umgebung kaum noch etwas. Allerdings ist dann aber auch die eigene Stimme kaum noch hörbar, da solche Kopfhörer oft sehr eng am Ohr anliegen und entsprechend schalldicht ausgeführt sind. Um sich selbst zu hören, wird man erneut versuchen, sehr laut zu reden, was zu den bereits beschriebenen Nachteilen führen kann.

Wie schon beschrieben, können Nebengeräusche auch über das Sprechmikrofon eines Teilnehmers aufgefangen und über das Konferenzsystem oder ein Telefonsystem an andere Teilnehmer übertragen werden. Eine Lösung für dieses Problem ist für Headsets im Mobilfunkbereich entwickelt worden, die beispielsweise mit zwei Richtmikrofonen, welche entgegengesetzt (zum Mund/vom Mund weg) angeordnet sind, arbeiten. Dort wird ebenfalls durch Kompensation des Umweltgeräusches die Signal-zu-Rausch-Charakteristik des gesendeten Signals verbessert. In diesem Falle werden die anderen Teilnehmer das Hintergrundgeräusch nicht mehr so stark hören. Allerdings bleibt der Teilnehmer selbst weiterhin der lauten Umgebung ausgesetzt, und es ist für die anderen Teilnehmer nicht nachvollziehbar, dass der Sprecher nur deshalb so laut redet, um das Umgebungsgeräusch zu übertönen, und dass dieser immer wieder Probleme hat, der Konferenz zu folgen, da ihn das laute Umgebungsgeräusch stört.

Ein Headset weist noch ein anderes Problem auf. Viele Headsets haben die Eigenschaft, mit der Hörmuschel möglichst schalldicht abzuschließen, um die Umgebungsgeräusche zu dämpfen. Dies führt dazu, dass man das Headset abnehmen muss, wenn man mit der Umgebung in Kontakt treten will. Außerdem ist das Headset störend groß. Das heißt, es ist ein Kompromiss zu machen, die Hörmuschel gut akustisch abzudichten, damit das Nutzsignal nicht zu stark verstärkt werden muss, denn die Verstärkung ist energieintensiv und kostet Batterielaufzeit. Zusätzlich ist auch hier bekannt, das Umgebungsgeräusch mit 180° Phasendrehung, das heißt, invertiert auszugeben, was am Ohr zur Auslöschung des Umgebungsgeräusches führt.

US 2012/308024 A1 offenbart ein Mobiltelefon mit Störsignalunterdrückung, wobei ein Anti-Störsignal adaptiv aus einem Referenzmikrofonsignal erzeugt wird, und wobei das Anti-Störsignal in den Lautsprecherausgang eingespeist wird, um Umgebungsgeräusche auszulöschen.

Eine Aufgabe der vorliegenden Erfindung besteht darin, eine Sprachkommunikation, wenn sich ein Sprecher unter dem Einfluss von Umgebungsgeräuschen befindet, sowohl für den Sprecher als auch für einen anderen Kommunikationsteilnehmer zu verbessern.

Die Aufgabe wird durch die Merkmale der unabhängigen Ansprüche gelöst. Vorteilhafte Weiterbildungen und bevorzugte Ausführungsformen der Erfindung sind in den Unteransprüchen angegeben.

Unter einem Mikrofon wird im Sinne der Erfindung jeder Schall-zu-Signal-Wandler verstanden. Das mittels des ersten Mikrofons erzeugte Sprachsignal spiegelt Lautäußerungen der ersten Person wider. Unter einem Übergeben und Erhalten kann im Sinne der Erfindung sowohl ein kommunikationstechnisches Übertragen mit Sende- und Empfangseinrichtungen als auch ein signaltechnisches Koppeln oder eine schaltungstechnische Leitungsverbindung verstanden werden. Ein Kommunikationsnetz kann im Sinne der Erfindung beispielsweise, aber nicht nur, ein fest verdrahtetes Telefonnetz, ein Funktelefonnetz oder sonstiges Funknetz, eine geeignete Gebäudeverkabelung, ein zentraler Konferenzserver etc. sein. Unter einem Lautsprecher kann im Sinne der Erfindung jeder Signal-zu-Schall-Wandler verstanden werden, insbesondere in einem Headset, Ohrhörer, Kopfhörer, einer In-Ear-Lautsprechereinrichtung etc. Die Signalverarbeitung kann analog oder digital erfolgen und sich fest verdrahteter Schaltelemente oder softwarebasierter Mittel bedienen. Unter einer variablen Dämpfung bzw. Verstärkung ist eine (frequenzabhängige oder frequenzunabhängige) Pegelabsenkung bzw. -anhebung durch automatische Mittel oder manuell durch eine Person, insbesondere die erste Person, zu verstehen. Des Weiteren kann unter einem Abzweigen im Sinne der Erfindung eine Gabelung eines Signalweges einer physikalischen Schaltungsanordnung oder ein Erzeugen einer Kopie einer digitalen Repräsentation des Sprachsignals verstanden werden. Vorzugsweise wird das Sprachsignal so, wie es empfangen wird, abgezweigt. Davon abweichend kann das Sprachsignal auch nach einem beliebigen der Verarbeitungsschritte in einem Verarbeitungsweg zwischen dem Erhalt des Sprachsignals und der Übergabe des Sendesignals abgezweigt werden.

Wenn das eigene Sprachsignal der ersten Person auf das Hörsignal addiert wird, wird gewährleistet, dass der Sprecher sich selbst hören kann. Dadurch kann der Sprecher leiser sprechen und auch ein gewisses Maß an Vertraulichkeit des Gesprächs herstellen, obwohl das Gespräch möglicherweise in der Öffentlichkeit stattfindet. Die Umgebung wird durch das Gespräch weniger gestört. Auch Konferenzteilnehmer oder Telefongesprächspartner der ersten Person werden durch ein zu lautes Sprechen der ersten Person nicht mehr irritiert. Durch eine Variabilität von Charakteristiken der Dämpfung bzw. Verstärkung kann auch eine angenehme Balance zwischen Empfangs- und Sprachsignal erreicht werden.

Vorzugsweise umfasst in dem erfindungsgemäßen Verfahren die Verarbeitung des Empfangssignals zur Erzeugung des Hörsignals die Schritte:

- Abzweigen des Sendesignals;
- Unterziehen des abgezweigten Sendesignals einer vorzugsweise variablen Echokompensation zur Erzeugung eines Echokompensationssignals, das einem erwarteten, in dem Empfangssignal enthaltenen Echo des Sendesignals entspricht; und
- Subtrahieren des Echokompensationssignals von dem Empfangssignal.

Unter einem Subtrahieren eines Signals kann im Sinne der Erfindung auch ein Addieren des invertierten, d.h., um 180° phasengedrehten Signals verstanden werden. Das Echokompensationssignal wird beispielsweise durch Anwenden einer Verzögerung und einer Dämpfung mit vorgegebenen oder einstellbaren oder automatisch adjustierbaren Parametern wie insbesondere Verzögerungszeit und Dämpfungsfaktor verwirklicht. Dadurch können akustische oder gerätetechnische Echoeffekte gemindert werden.

Das erfindungsgemäße Verfahren weist den Schritt auf:

- Erhalten eines allgemeinen Umgebungssignals von einem zweiten Mikrofon, das in einer Umgebung, in welcher sich die erste Person befindet, angeordnet ist und eine von dem ersten Mikrofon sich unterscheidende Schallannahmecharakteristik, insbesondere Schallannahmerichtung, aufweist,

wobei die Verarbeitung des Sprachsignals zur Erzeugung des Sendesignals den Schritt umfasst:

- Subtrahieren des allgemeinen Umgebungssignals von dem Sprachsignal, wobei das allgemeine Umgebungssignal vor dem Subtrahieren einer vorzugsweise variablen Dämpfung unterzogen wird.

Ein Umgebungssignal spiegelt im Sinne der Erfindung ein akustisches Signal bzw. ein Rauschsignal einer Umgebung, in welcher die erste Person sich befindet, wieder. Mit der Charakterisierung als allgemeines Umgebungssignal wird im Sinne der Erfindung ausgedrückt, dass das Umgebungssignal eine allgemein in der Umgebung der ersten Person vorherrschenden Geräuschpegel widerspiegelt, ohne dass es an einen speziellen Ort gebunden ist. Das zweite Mikrofon kann daher dem ersten Mikrofon baulich vereinigt sein oder von dem ersten Mikrofon baulich getrennt vorgesehen sein. In jedem Fall ist das zweite Mikrofon ein eigener Schall-zu-Signal-Wandler. Durch die Subtraktion des Umgebungssignals von dem Sprachsignal der ersten Person können Umgebungsgeräusche wirksam aus dem Sendesignal gefiltert werden. Das Signal-zu-Rausch-Verhältnis des Sendesignals verbessert sich. Andere Kommunikationspartner wie etwa Konferenzteilnehmer oder Telefonpartner werden durch Geräusche in einer Umgebung, in welcher die erste Person sich befindet, nicht mehr gestört. Zur Erhaltung eines wirklichkeitsgetreuen Höreindrucks kann die Filterung des Umgebungsgeräuschs nur zu einem Teil erfolgen, sodass das Umgebungsgeräusch zu einem geringen Anteil mit übertragen wird und sich die Gesprächspartner auch auf die Situation der ersten Person einstellen können. Die variable Dämpfung ist vorzugsweise automatisch durch eine Steuereinheit oder manuell durch die erste Person einstellbar. Denkbar ist auch eine Einstellung der variablen Dämpfung durch externe Stellen wie etwa einen Konferenzserver oder dergleichen, wenn das Verfahren in einem Konferenzsystem angewendet wird. Im erfindungsgemäßen Verfahren umfasst die Verarbeitung des Empfangssignals zur Erzeugung des Hörsignals die Schritte:

- Abzweigen des allgemeinen Umgebungssignals; und
- Subtrahieren des abgezweigten allgemeinen Umgebungssignals von dem Empfangssignal, wobei das abgezweigte allgemeine Umgebungssignal vor dem Subtrahieren einer vorzugsweise variablen Dämpfung unterzogen wird.

Auf diese Weise wird die erste Person von den Umgebungsgeräuschen abgeschirmt, indem das allgemeine Umgebungssignal um 180° phasengedreht auf das Hörsignal aufgespielt wird. Das über die Umgebung wahrgenommene Geräusch und das invertierte Umgebungssignal löschen sich am Ohr der ersten Person, also dort, wo der Lautsprecher platziert ist, mehr oder weniger aus. Auch hier kann die Auslöschung nur auf einem gewissen Grad beschränkt werden, sodass die erste Person den Kontakt zur Umgebung nicht völlig verliert. Dies kann insbesondere im Straßenverkehr oder anderen sicherheitsrelevanten Situationen wie etwa einer Maschinenumgebung bzw. allgemein zur Wahrung einer realistischen Situationseinschätzung wichtig sein.

In dieser Ausführungsform erfolgt die Erzeugung des Sprachsignals und des allgemeinen Umgebungssignals vorzugsweise an wenigstens im Wesentlichen gleicher Stelle, vorzugsweise in der Nähe eines Mundes der ersten Person, mit unterschiedlicher Schallannahmerichtung des ersten Mikrofons und des zweiten Mikrofons. Mit anderen Worten, die Erzeugung des Sprachsignals und des allgemeinen Umgebungssignals erfolgen so, dass das erste Mikrofon über die Sprachorgane der ersten Person abgegebene Schallsignale samt Umgebungsschall aufnehmen und in Sprachsignale wandeln kann, während das zweite Mikrofon einen Umgebungsschall unter möglichster Ausblendung bzw. Abschirmung des Sprachschalls in das allgemeine Umgebungssignal wandelt, wobei der Umgebungsschall die Sprache der ersten Person wenigstens im Wesentlichen nicht enthält.

Gemäß dem erfindungsgemäßen Verfahren ist ferner der Schritt:

- Erhalten eines speziellen Umgebungssignals von einem dritten Mikrofon, das in der Nähe eines Ohres der ersten Person, insbesondere näher an dem Ohr der ersten Person als das zweite Mikrofon, angeordnet ist,

vorgesehen wobei die Verarbeitung des Empfangssignal zur Erzeugung des Hörsignals den Schritt umfasst:

- Subtrahieren des speziellen Umgebungssignals von dem Empfangssignal, wobei das spezielle Umgebungssignal vor dem Subtrahieren einer vorzugsweise variablen Dämpfung unterzogen wird.

Durch die Verwendung eines speziellen Umgebungssignals in der Nähe des Ohres der ersten Person kann das Verfahren einen Umgebungsschall, der an einem Wiedergabeort des Lautsprechers, d.h., am Ohr der ersten Person, vorherrscht, von einer Umgebungsschallbedingung an einem Sprachaufnahmeort, an welchem das erste Mikrofon den Sprachschall der ersten Person aufnimmt, unterscheiden. Hierdurch kann eine additive Ausblendung des Umgebungsschalls durch Addieren eines invertierten bzw. 180°-phasengedrehten Umgebungssignals sowohl für die das Sendesignal erhaltende zweite Person als auch für die das Hörsignal erhaltende erste Person separat optimiert werden. Gemäß der Erfindung erfolgt die Erzeugung des Hörsignals und des speziellen Umgebungssignals an wenigstens im Wesentlichen gleicher Stelle durch den Lautsprecher bzw. das dritte Mikrofon, wobei eine Schallannahmerichtung des dritten Mikrofons wenigstens im Wesentlichen mit einer Schallabgaberichtung des Lautsprechers übereinstimmt. Dabei wird die Schallannahmecharakteristik des dritten Mikrofons an eine Schallannahmecharakteristik des menschlichen Ohres angepasst. Hierdurch kann die Abschirmung eines Ohres der ersten Person von Umgebungsgeräuschen besonders wirksam umgesetzt werden, sodass an der Stelle des Lautsprechers das Empfangssignal und gegebenenfalls das eigene Sprachsignal, nach geeigneter Dämpfung des am Ohr vorherrschenden Umgebungsgeräuschs, in optimaler Verständlichkeit wiedergegeben werden.

In einer besonders bevorzugten Weiterbildung der Erfindung erfolgt die Verarbeitung des Empfangssignals für jedes Ohr der ersten Person nach dem oben genannten Verfahren separat in solcher Weise, dass

- der Lautsprecher einen ersten Lautsprecher, der einem ersten Ohr der ersten Person zugeordnet ist, und einen zweiten Lautsprecher, der einem zweiten Ohr der ersten Person zugeordnete ist, umfasst,

- das Hörsignal ein erstes Hörsignal zur Übergabe an den ersten Lautsprecher und ein zweites Hörsignal zur Übergabe an den zweiten Lautsprecher umfasst,
- das dritte Mikrofon ein erstes drittes Mikrofon und ein zweites drittes Mikrofon umfasst,
- das spezielle Umgebungssignal ein erstes spezielles Umgebungssignal, das von dem ersten dritten Mikrofon erzeugt wird und ein zweites spezielles Umgebungssignal, das von dem zweiten dritten Mikrofon erzeugt wird, umfasst, und
- das erste spezielle Umgebungssignal vorzugsweise variabel gedämpft und zur Erzeugung des ersten Hörsignals von dem Empfangssignal subtrahiert wird, während das zweite spezielle Umgebungssignal vorzugsweise variabel gedämpft und zur Erzeugung des zweiten Hörsignals von dem Empfangssignal subtrahiert wird.

Mit anderen Worten, in dieser Ausführungsform ist vorgesehen, dass die Erzeugung des Hörsignals in zwei Kanälen, d.h., in Stereo erfolgt. Da an jedem Ohr ein spezielles Umgebungssignal erhalten und dem jeweiligen Hörsignal invertiert aufgespielt wird, kann eine Ausblendung des Umgebungsgeräusches für jedes Ohr optimiert erfolgen. Daher kann beispielsweise eine laute Unterhaltung, die auf einer Seite der ersten Person vorherrschend ist, besonders auf dieser Seite ausgeblendet werden, während ein Hintergrundrauschen wie etwa von einer befahrenen Straße, das auf der anderen Seite der ersten Person vorherrschend ist, für diese Seite bevorzugt ausgeblendet werden.

Gemäß einem weiteren Gesichtspunkt kann ein Verfahren zur Verarbeitung eines Empfangssignals zur Wiedergabe in einem ersten Kanal und einem zweiten Kanal über eine Kopfhörereinrichtung, wobei jeder Kanal einer Seite der Kopfhörereinrichtung zugeordnet ist, angegeben werden, wobei das Verfahren die Schritte aufweist:

- Erhalten eines Empfangssignals;
- Verarbeiten des Empfangssignals zu einem ersten Hörsignal, das dem ersten Kanal zugeordnet ist, und einem zweiten Hörsignal, das dem zweiten Kanal zugeordnet ist; und
- Übergeben des ersten Hörsignals an einen ersten Lautsprecher der Kopfhörereinrichtung und des zweiten Hörsignals an einen zweiten Lautsprecher der Kopfhörereinrichtung,

wobei der Schritt des Verarbeitens des Empfangssignals zur Erzeugung der Hörsignale die Schritte umfasst:

- Erhalten eines ersten Umgebungssignals von einem ersten Mikrofon, das in der Nähe des ersten Lautsprechers oder mit diesem baulich vereinigt vorgesehen ist, und eines zweiten Umgebungssignals von einem zweiten Mikrofon, das in der Nähe des zweiten Lautsprechers oder mit diesem baulich vereinigt vorgesehen ist;
- Subtrahieren des ersten Umgebungssignals von dem Empfangssignal in einem Verarbeitungsweg zur Erzeugung des ersten Hörsignals und Subtrahieren des zweiten Umgebungssignals von dem Empfangssignal in einem Verarbeitungsweg zur Erzeugung des zweiten Hörsignals, wobei das erste und das zweite Umgebungssignal vor dem Subtrahieren jeweils einer vorzugsweise variablen Dämpfung unterzogen werden.

Dabei kann eine Verarbeitung eines über ein weiteres Mikrofon aufgenommenen Sprachsignals zur Erzeugung eines an ein Kommunikationsnetz zu übertragenden Sendesignal vorgesehen sein, wobei die Verarbeitung des Sprachsignals die Schritte aufweist:

- Abzweigen des ersten und/oder des zweiten Umgebungssignals; und
- Subtrahieren des abgezweigten ersten und/oder zweiten Umgebungssignals von dem Sprachsignal, wobei das erste und/oder zweite Umgebungssignal vor dem Subtrahieren von dem Sprachsignal einer vorzugsweise variablen Dämpfung unterzogen wird bzw. werden.

Durch die Verwendung des ersten und/oder zweiten Umgebungssignals, das an den Lautsprechern der Kopfhörereinrichtung erzeugt wird, kann auf ein weiteres Mikrofon zur Erfassung eines allgemeinen Umgebungsschalls verzichtet werden. Das Sprachsignal kann dann auch von dem Kommunikationsnetz empfangen werden, sodass das Audiowiedergabeverfahren nach diesem Gesichtspunkt auch als ein Verfahren zur Steuerung einer Sprachkommunikation verwendbar ist.

In allen bisher beschriebenen Gesichtspunkten der Erfindung kann die Verarbeitung des Sprachsignals zur Erzeugung des Sendesignals eine automatische Pegelanpassung bzw. -steuerung aufweisen.

Je nach Art der Übertragung des Empfangssignals, etwa wenn die beiden Kanäle einem einzigen Trägersignal aufmoduliert oder geduplext sind, kann eine Aufspaltung (Trennung) des Empfangssignals in die zwei Hörkanäle erforderlich sein. Es kann aber auch das Empfangssignal bereits in zwei Kanälen getrennt erhalten werden, etwa auf zwei unterschiedlichen Frequenzen oder über getrennte Kabel bzw. Kabeladern, wobei dann das Empfangssignal des ersten Kanals zur Erzeugung des ersten Hörsignals verarbeitet wird, während das Empfangssignal des zweiten Kanals zur Verarbeitung des zweiten Hörsignals herangezogen wird.

Gemäß einem weiteren Gesichtspunkt der Erfindung wird eine Vorrichtung zur Steuerung einer Sprachkommunikation vorgeschlagen, wobei die Vorrichtung ausgelegt und eingerichtet ist, um das vorstehend beschriebene Verfahren auszuführen. Die Aufgabe der vorliegenden Erfindung wird durch diese Vorrichtung aus denselben Gründen gelöst, wie diese weiter oben für das erfindungsgemäße Verfahren angegeben wurden. Die Einrichtung zur Ausführung des Verfahrens kann beispielsweise durch eine entsprechend programmierte Recheneinheit oder durch entsprechend ausgebildete und verdrahtete Hardware gegeben sein.

Nach einem weiteren Gesichtspunkt der vorliegenden Erfindung wird die vorstehend beschriebene Vorrichtung für eine Sprech-Hör-Einheit verwendet, die ausgewählt ist aus der Gruppe, welche wenigstens einen Sprechfunkhelm, ein Headset, ein Tarnhead, einen Kopfhörer nebst einem separaten Mikrofon, einen Ohrlautsprecher im Sinne eines Hörgeräts; und eine Mikrofon-Kopfhöreranordnung in einer Konferenzsituation, wobei die Vorrichtung in der Sprech-Hör-Einheit integriert oder separat davon vorgesehen ist.

Die Erfindung ist auch verkörperbar durch ein Computerprogramm, umfassend Programmbefehle, die einen Computer dazu veranlassen, die Verfahrensschritte des beschriebenen Verfahrens auszuführen, wenn das Computerprogramm auf den Computer geladen oder von diesem ausgeführt wird. Das erfindungsgemäße Verfahren ist auch verkörperbar durch ein Softwareprodukt, das auf einem durch einen Computer lesbaren Medium gespeichert ist und das vorzugsweise direkt in den internen Speicher eines Computer geladen werden kann und das Programmcodes zur Durchführung der Verfahrensschritte des beschriebenen Verfahrens, wenn das Computerprogramm auf den Computer ausgeführt wird, aufweist. Ferner ist die Erfindung durch ein digitales Speichermedium verkörperbar mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte des beschriebenen Verfahrens auszuführen.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen der naturgesetzlichen Gründen offensichtlich abwegig ist. Ausführungsbeispiele können miteinander kombiniert werden, und die Kombination kann ebenfalls als Ausführungsbeispiel der Erfindung verstanden werden, sofern sie unter den Gegenstand fällt, der durch die Ansprüche definiert ist. Im Folgenden wird die Erfindung anhand bevorzugter Ausführungsbeispiele und mithilfe der beigefügten Figuren näher beschrieben. Dabei ist

Fig. 1     ein Blockschema zur Veranschaulichung von Signalflüssen bzw. Signalverarbeitungsschritten gemäß einem ersten Beispiel;

Fig. 2     ein Blockschema zur Veranschaulichung von Signalflüssen bzw. Signalverarbeitungsschritten gemäß einem zweiten Ausführungsbeispiel der vorliegenden Erfindung;

Fig. 3     eine schematische Darstellung einer Sprachgarnitur gemäß einem dritten Beispiel;

Fig. 4     eine schematische Darstellung eines Funk-Headsets gemäß einem vierten Beispiel;

Fig. 5     eine schematische Darstellung eines Stereo-Headsets gemäß einem fünften Ausführungsbeispiel der vorliegenden Erfindung.

Die Figuren sind schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

<Erstes Beispiel>

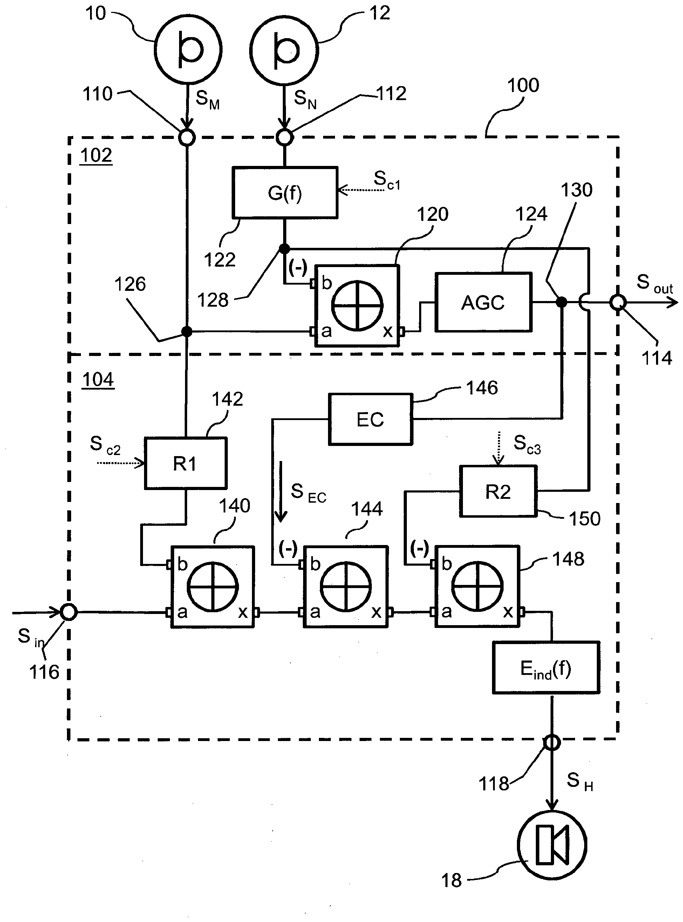

Ein erstes Beispiel ist in Fig. 1 in Form eines Blockschemas von Signalflüssen bzw. Signalverarbeitungsschritten veranschaulicht. Gemäß der Darstellung in Fig. 1 weist ein Signalverarbeitungsblock 100 eine Sendeseite 102 und eine Empfangsseite 104 auf. Auf der Sendeseite 102 wird ein durch ein Sprechmikrofon 10 erzeugtes Sprachsignal $S_M$ einem Mikrofoneingang 110 zugeführt und wird ein über ein Umgebungsmikrofon 12 erzeugtes Umgebungssignal $S_N$ einem Mikrofoneingang 112 zugeführt, während an einem Sendesignalausgang 114 ein Sendesignal $S_{out}$ anliegt. Auf der Empfangsseite 104 wird über einen Empfangssignaleingang 116 ein Empfangssignal $S_{in}$ erhalten und liegt an einem Lautsprecherausgang 118 ein Hörsignal $S_H$ an, das einem Lautsprecher 18 zugeführt wird. Der Mikrofoneingang 110 kann auch als Sprechmikrofoneingang 110 oder als Sprachsignaleingang 110 bezeichnet werden, der Mikrofoneingang 112 kann auch als Umgebungsmikrofoneingang 110 oder als Umgebungssignaleingang 110 bezeichnet werden, und der Lautsprecherausgang 118 kann auch als Hörsignalausgang 118 bezeichnet werden. Das Umgebungssignal $S_N$ kann auch als Rauschsignal in Bezug auf das Sprachsignal $S_M$ bezeichnet werden.

Auf der Sendeseite 102 passiert das an dem Mikrofoneingang 110 erhaltene Sprachsignal $S_M$ eine weiter unten näher beschriebene Verzweigungsstelle 126 und wird danach einem Eingang a eines Addierglieds 120 zugeführt. Das Addierglied 120 weist neben dem Eingang a einen negativen (invertierenden) Eingang b auf. D. h., vor einer Addition wird das an dem negativen Eingang b anliegende Signal invertiert, d. h., um 180° in der Phase gedreht. Ein Addierglied mit einem negativen Eingang kann auch als Subtraktionsglied bezeichnet werden. Der negative Eingang b des Addierglieds 120 ist mit einem Ausgang eines Dämpfungsglieds 122 verbunden.

Das Dämpfungsglied 122 erhält als Eingangssignal das an dem Mikrofoneingang 112 erhaltene Umgebungssignal $S_N$. Das Dämpfungsglied 122 unterwirft das Umgebungssignal $S_N$ einer Dämpfungsfunktion G(f). Bei G(f) handelt es sich um eine frequenzabhängige Dämpfungsfunktion $G(f) = A_x{}^* E(f)$, wobei E(f) eine (hör-/sprach-/audio-)frequenzabhängige Entzerrerfunktion (Equalizer, Frequenzgangverzerrung) darstellt die auch programmierbar sein kann und $A_x$ eine in Abhängigkeit von mindestens einer Variable "x" einstellbare hinsichtlich der Frequenz konstante Dämpfung darstellt. G(f) ist eine Kombination von Vorverzerrung des Frequenzganges und einer konstanten Dämpfung, wobei es auch einen Frequenzbereich geben kann, bei dem insgesamt eine Verstärkung als negative Dämpfung stattfindet. Durch Anwenden der Dämpfungsfunktion G(f) auf das Eingangssignal, z.B. das Umgebungssignal $S_N$, kann man die Sprachverständlichkeit verbessern und die Raumgegebenheiten ausgleichen. Die Charakteristik der Dämpfungsfunktion G(f) ist durch ein von außen zuführbares Steuersignal $S_{c1}$ beeinflussbar. Am Ausgang des Dämpfungsglieds 122 liegt somit ein gedämpftes Umgebungssignal $S_N \times G(f)$ an.

Das gedämpfte Umgebungssignal passiert eine später näher beschriebene Verzweigungsstelle 128 und wird danach dem negativen Eingang b des Addierglieds 120 zugeführt. Nach Addition der Eingänge a, b in dem Addierglied 120 liegt an dessen Ausgang x ein umgebungskompensiertes Sprachsignal $S_M - S_N \times G(f)$ an, welches danach noch einer automatischen Pegelsteuerung (AGC - Automatic Gain Control) 124 unterzogen wird und nach Passieren einer nachstehend näher beschriebenen Verzweigungsstelle 130 dem Sendesignalausgang 114 als Sendesignal $S_{out}$ zugeführt wird. Nach der vorstehenden Beschreibung kann das Sendesignal $S_{out}$ durch die Formel

$$S_{out} = AGC(S_M - S_N \times G(f))$$

ausgedrückt werden. Der Sendesignalausgang 114 ist auch eine Schnittstelle mit einem nicht näher dargestellten Kommunikationsnetz zur Übergabe des Sendesignals $S_{out}$.

Auf der Empfangsseite 104 wird das über den Empfangssignaleingang 116 von dem Kommunikationsnetz erhaltene Empfangssignal $S_{in}$ in drei Addiergliedern 140, 144 und 148 verarbeitet und danach dem Lautsprecherausgang 118 als das Hörsignal $S_H$ zugeführt, wie nachstehend genauer ausgeführt wird. Das Empfangssignal $S_{in}$ kann nach Verarbeitung in den drei Addiergliedern 140, 144 und 148 dem Equalizer E(f) zugeführt, wobei der Ausgang des Equalizers dem Lautsprecherausgang 118 zugeführt wird. Der Equalizer kann ohrspezifisch ausgeführt sein, wobei eine benutzerindividuelle Hörschwäche, z.B. eine Hörschwäche eines Hörgeräteträgers oder eine andersartige Hörschwäche (Abfall der Hörempfindlichkeit im Bereich hoher Frequenzen z.B. im Alter, nach einem Unfall, etc., chronische Schädigung des Hörvermögens in der Jugend durch Hören von zu lauter Musik) mit diesem Equalizer ausgleichbar ist, um die Sprachverständlichkeit zu erhöhen. Zum Ausgleichen einer benutzerspezifischen Hörschwäche kann die Funktion Equalizer E(f) durch Messen des Hörspektrums des Benutzers, abgekürzt "Vermessen" genannt, bestimmt werden. Das Vermessen kann wie bei der Anpassung eines Hörgerätes erfolgen. Alternativ sind im Equalizer voreingestellte Frequenzgänge/Frequenzverläufe denkbar, von denen mindestens einer von dem Benutzer auswählbar ist.

Zunächst wird das an dem Empfangssignaleingang 116 erhaltene Empfangssignal $S_{in}$ einem ersten Eingang a des Addierglieds 140 zugeführt. Das Addierglied 140 weist zwei positive Eingänge a, b auf. Der zweite Eingang b des Addierglieds 140 ist mit einem Ausgangssignal eines Dämpfungsglieds 142 verbunden.

Das Dämpfungsglied 142 erhält das auf der Sendeseite 102 an der Verzweigungsstelle 126 abgegriffene (abgezweigte) Mikrofonsignal $S_M$ und unterwirft dieses einem Dämpfungsfaktor $R_1$, der durch ein von außen zuführbares Steuersignal $S_{c2}$ beeinflussbar ist. Mit anderen Worten, am Ausgang des Dämpfungsglieds 142 liegt ein gedämpftes Sprachsignal $S_M \times R_1$ an.

Das gedämpfte Sprachsignal wird dem zweiten Eingang b des Addierglieds 140 zugeführt und zu dem am ersten Eingang a anliegenden Empfangssignal $S_{in}$ addiert. An dem Ausgang x des Addierglieds 140 liegt somit ein Additionssignal $S_{in} + S_M \times R_1$ an.

Das Additionssignal wird dem ersten Eingang a des nächsten Addierglieds 144 zugeführt. Der zweite Eingang b des Addierglieds 144 ist ein negativer Eingang, der mit einem Ausgang eines Echokompensationsglieds (EC) 146 verbunden ist.

Das Echokompensationsglied 146 erhält das auf der Sendeseite 102 von dem Verzweigungspunkt 130 abge-

griffene (abgezweigte) Sendesignal $S_{out}$ und verarbeitet dieses so, dass ein als Ergebnis ausgegebenes Echokompensationssignal $S_{EC}$ einem erwarteten Echo des Sendesignals $S_{out}$ in dem Empfangssignal $S_{in}$ entspricht. Hierzu unterzieht das Echokompensationsglied 146 das abgegriffene Sendesignal $S_{out}$ einer vorbestimmten Verzögerung und Dämpfung, wie es in der Technik an sich bekannt ist.

Das von dem Echokompensationsglied 146 ausgegebene Echokompensationssignal $S_{EC}$ wird dem negativen Eingang b des Addierglieds 144 zugeführt und von dem am positiven Eingang a anliegenden Additionssignal subtrahiert. Demzufolge liegt am Ausgang x des Addierglieds 144 ein echokompensiertes Additionssignal $S_{in} + S_M \times R_1 - EC(S_{out})$ an.

Das echokompensierte Additionssignal wird dem Eingang a des letzten Addierglieds 148 zugeführt. Der zweite Eingang b des Addierglieds 148 ist wiederum ein negativer Eingang, der mit einem Ausgang eines eines weiteren Dämpfungsglieds 150 verbunden ist.

Das Dämpfungsglied 150 erhält das auf der Sendeseite 102 an der Verzweigungsstelle 128 abgegriffene gedämpfte Umgebungssignal $S_N \times G(f)$ und unterwirft es einem Dämpfungsfaktor $R_2$. Der Dämpfungsfaktor $R_2$ ist über ein von außen zuführbares Steuersignal $S_{c3}$ beeinflussbar. Das mithin zum zweiten Mal gedämpfte Umgebungssignal $S_N \times G(f) \times R_2$ wird dem negativen Eingang b des Addierglieds 148 zugeführt und von dem am positiven Eingang a anliegenden, echokompensierten Additionssignal subtrahiert. Somit liegt an dem Ausgang x des Addierglieds 148 ein Signal an, das schließlich optional einem individuell an das Hörvermögen des Benutzers/Headsetträgers anpassbaren Equalizer $E_{ind}(f)$ zugeführt wird, der eine Hörschwäche des Benutzers ausgleicht. Der Ausgang des optionalen Equalizers bzw. der Ausgang 148 wird dann als das Hörsignal $S_H$ dem Lautsprecherausgang 118 zugeführt wird. Gemäß vorstehender Beschreibung kann das Hörsignal $S_H$ durch die Formel

$$S_H \;=\; E_{ind}(f) \times (S_{in} + S_M \times R_1 - S_N \times G(f) \times R_2 - EC(S_{out}))$$
$$=\; E_{ind}(f) \times (S_{in} + S_M \times R_1 - S_N \times G(f) \times R_2 - EC(AGC(S_M - S_N \times G(f))))$$

ausgedrückt werden, wobei ohne Ausgleich der Hörschwäche des Benutzers die Funktion Equalizer $E_{ind}(f)$ zu 1 gesetzt wird.

<Zweites Ausführungsbeispiel>

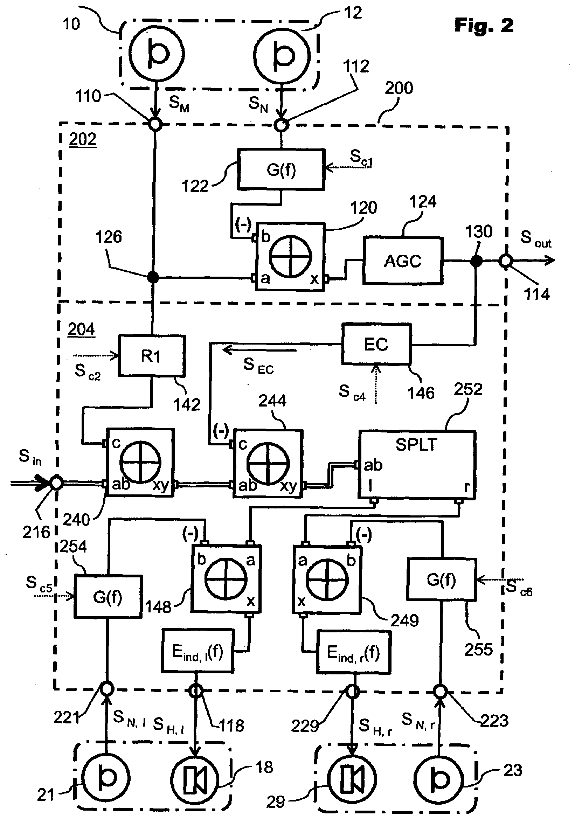

Fig. 2 zeigt ein zweites Ausführungsbeispiel der vorliegenden Erfindung in Form eines schematischen Blockschaubildes zur Veranschaulichung von Signalflüssen bzw. - verarbeitungsschritten. Dieses Ausführungsbeispiel kann als eine Abwandlung des ersten Beispiels verstanden werden, weshalb Bestandteile des zweiten Ausführungsbeispiels, die bereits in dem ersten Beispiel beschrieben wurden, mit den gleichen Bezugszeichen versehen sind und nur noch verkürzt beschrieben werden, sofern eine ausführliche Beschreibung nicht zum Verständnis hilfreich ist.

Bezüglich gleicher Elemente kann jedenfalls auf die Erläuterungen zu dem ersten Beispiel Bezug genommen werden. Gemäß der Darstellung in Fig. 2 weist ein Signalverarbeitungsblock 200 eine Sendeseite 202 und eine Empfangsseite 204 auf. Wie in dem ersten Beispiel werden auf der Sendeseite 202 ein Sprachsignal $S_M$ von einem Sprechmikrofon 10 über einen Mikrofoneingang 110 und ein Umgebungssignal $S_N$ von einem Umgebungsmikrofon 12 über einen Mikrofoneingang 112 erhalten und wird ein Sendesignal $S_{out}$ über einen Sendesignalausgang 114 ausgegeben. Zur Unterscheidung weiterer Umgebungsmikrofone bzw. Umgebungssignale, die weiter unten beschrieben werden, wird im Folgenden das Umgebungssignal $S_N$ auch als allgemeines Umgebungssignal $S_N$ bezeichnet und wird das Umgebungsmikrofon 12 auch als allgemeines oder globales Umgebungsmikrofon 12 bezeichnet. Wie in dem ersten Beispiel wird das allgemeine Umgebungssignal $S_N$ durch das Dämpfungsglied 122 einer Dämpfungsfunktion $G(f)$ mit einer über ein Steuersignal $S_{c1}$ beeinflussbaren Charakteristik unterworfen und danach dem negativen Eingang b des Addierglieds 120 zugeführt, um dort von dem Sprachsignal $S_M$ subtrahiert zu werden, und wird der Ausgang des Addierglieds 120 nach Anwendung der automatischen Pegelsteuerung 124 als das Sendesignal $S_{out}$ ausgegeben an dem Sendesignalausgang 114 an ein nicht näher dargestelltes Kommunikationsnetz übergeben.

Auf der Empfangsseite 204 wird ein Empfangssignal $S_M$ über einen Empfangssignaleingang 216 von dem Kommunikationsnetz erhalten, wobei das Empfangssignal $S_{in}$ im Unterschied zu dem ersten Beispiel ein Stereo-Empfangssignal ist, das einen linken und einen rechten Kanal umfasst, und der Empfangssignaleingang 216 somit als Stereo-Eingang ausgelegt ist.

Das Stereo-Empfangssignal $S_{in}$ wird zunächst einem Addierglied 240 zugeführt, welches sich von dem Addierglied 140 in dem ersten Beispiel darin unterscheidet, dass es einen Stereo-Eingang ab, einen Additionseingang c und einen Stereo-Ausgang xy aufweist. Die Addition erfolgt dabei derart, dass das an dem Additionseingang c anliegende Signal in beiden Kanälen des an dem Stereo-Eingang ab anliegenden Stereo-Signals aufaddiert wird. Wie beschrieben, liegt an dem Stereo-Eingang ab das über dem Empfangssignaleingang 216 der Empfangsseite 204 erhaltene Empfangssignal $S_{in}$ an. An dem Additionseingang c des Addierglieds 240 liegt wie in dem ersten Beispiel das durch das Dämpfungsglied 142 mit dem über das Steuersignal $S_{c2}$ beeinflussbaren Dämpfungsfaktor $R_1$ gedämpfte Sprachsignal

an. An dem Ausgang xy des Addierglieds 240 liegt somit ein Ausgangssignal $S_{in} + S_m \times R_1$ an, welches einem Stereo-Eingang ab eines weiteren Addierglieds 244 zugeführt wird.

Das Addierglied 244 unterscheidet sich von dem Addierglied 144 des ersten Beispiels wiederum nur durch seine Stereo-Auslegung. Es weist daher neben dem Stereo-Eingang ab einen negativen Eingang c sowie eine Stereo-Ausgang xy auf. Dem negativen Eingang c des Addierglieds 244 wird wie bei dem ersten Beispiel das durch das Echokompensationsglied 146 erzeugte Echokompensationssignal $S_{EC} = EC(S_{out})$ zugeführt. Im Unterschied zu dem ersten Beispiel ist in dem vorliegenden Ausführungsbeispiel vorgesehen, dass die Charakteristik des Echokompensationsglieds 146 über ein weiteres Steuersignal $S_{c4}$ beeinflussbar ist. Es liegt somit an dem Ausgang xy des Addierglieds 244 ein echokompensiertes Additionssignal $S_{in} + S_M \times R_1 - EC(S_{out})$ an, welches einem Stereo-Eingang ab eines Kanaltrennungsglieds 252 zugeführt wird.

Das Kanaltrennungsglied 252 trennt das Stereo-Empfangssignal, welches an dem Eingang ab anliegt, in separate Mono-Ausgänge I und r auf, die anschließend in getrennten Signalwegen weiter verarbeitet werden. Dabei steht ein von dem Ausgang I ausgehender Verarbeitungsweg für einen linken Hörkanal, während ein von dem Ausgang r ausgehender Verarbeitungsweg für einen rechten Hörkanal steht.

Des Weiteren weist die Empfangsseite 204 des Signalverarbeitungsblocks 200 in diesem Ausführungsbeispiel neben dem Lautsprecherausgang 118, der ein linkes Hörsignal $S_{H,I}$ für den Lautsprecher 18, der hier als linker Lautsprecher 18 zu verstehen ist, auch einen weiteren Lautsprecherausgang 229, an welchem ein rechtes Hörsignal $S_{H,r}$ für einen rechten Lautsprecher 29 anliegt, auf. Zum anderen sind ein linkes Ohrschallmikrofon 21 und ein rechtes Ohrschallmikrofon 23 vorgesehen. Ein von dem linken Ohrschallmikrofon 21 erzeugtes Signal wird in dem Signalverarbeitungsblock an einem linken Mikrofoneingang 221 als linkes Ohrsignal $S_{N,I}$ erhalten und einem Dämpfungsglied 254 zugeführt. Das Dämpfungsglied 254 stellt eine Dämpfungsfunktion $G_I(f)$ bereit. Die Charakteristik der Dämpfungsfunktion $G_I(f)$ ist durch ein Steuersignal $S_{c5}$ beeinflussbar. Gleichermaßen wird ein durch das rechte Ohrschallmikrofon 23 erzeugtes Signal an einem rechten Mikrofoneingang 223 als rechtes Ohrsignal $S_{N,r}$ erhalten und einem Dämpfungsglied 255 zugeführt, wo es einer Dämpfungsfunktion $G_r(f)$, deren Charakteristik durch ein weiteres Steuersignal $S_{c6}$ beeinflussbar ist, unterzogen wird. Das linke und rechte Ohrsignal $S_{N,I}$, $S_{N,r}$ können - in Abgrenzung von dem allgemeinen Umgebungssignal $S_N$ - auch als linkes und rechtes spezielles Umgebungssignal $S_{N,I}$, $S_{N,r}$ bezeichnet werden. Der Mikrofoneingang 112 kann auch als allgemeiner Umgebungsmikrofoneingang 110 oder als allgemeiner Umgebungssignaleingang 110 bezeichnet werden, der linke und der rechte Mikrofoneingang 221, 223 können auch als linker/rechter Ohrsignaleingang 221, 223, als linker/rechter spezieller Mikrofoneingang 221, 223, oder als linker/rechter spezieller Umgebungssignaleingang 221 bezeichnet werden.

Wird das Empfangssignal $S_{in}$ als kombiniertes Signal mit den Anteilen $S_{in,I}$, $S_{in,r}$ für den linken bzw. rechten Kanal verstanden, liegt gemäß vorstehender Beschreibung an dem linken Ausgang I des Kanaltrennungsglieds 252 ein linkes echokompensiertes Additionssignal $S_{in,I} + S_M \times R_1 - EC(S_{out})$ an und liegt an dem rechten Ausgang r des Kanaltrennungsglieds 252 ein rechtes echokompensiertes Additionssignal $S_{in,r} + S_M \times R_1 - EC(S_{out})$ an. Das linke echokompensierte Additionssignal wird nun dem ersten Eingang des Addierglieds 148 zugeführt, das dem Addierglied 148 des ersten Beispieles entspricht. Gleichermaßen wird das rechte echokompensierte Additionssignal einem ersten Eingang a eines weiteren Addierglieds 249 zugeführt, das im Aufbau dem Addierglied 148 entspricht.

Auf der linken Seite wird nun dem negativen Eingang des Addierglieds 148 das durch das Dämpfungsglied 254 gedämpfte linke Ohrsignal $S_{N,I} \times G_I(f)$ zugeführt, und das Ausgangssignal des Addierglieds 148 wird wie im ersten Beispiel optional einem individuellen Equalizer für das linke Ohr zugeführt $E_{ind,I}(f)$, der eine Hörschwäche des linken Ohrs ausgleicht. Der Ausgang des optionalen Equalizers bzw.der Ausgang 148 wird dann dem Lautsprecherausgang 118 als das (hier: linke) Hörsignal $S_{H,I}$ zugeführt. Auf der rechten Seite wird in analoger Weise das durch das Dämpfungsglied 255 gedämpfte rechte Ohrsignal $S_{N,r} \times G_r(f)$ einem negativen Eingang b des Addierglieds 249 zugeführt und wird ein an einem Ausgang x des Addierglieds 249 anliegendes Signal optional einem individuellen Equalizer für das rechte Ohr zugeführt bzw. $E_{ind,r}(f)$, der eine Hörschwäche des rechten Ohrs ausgleicht. Der Ausgang des optionalen Equalizers bzw. der Ausgang 249 wird dann als das rechte Hörsignal $S_{H,r}$ dem Mikrofonausgang 229 zugeführt.

Wie aus vorstehender Beschreibung ersichtlich, kann das linke Hörsignal $S_{H,I}$ durch die Formel

$$S_{H,I} = E_{ind,I}(f) \times (S_{in,I} + S_M \times R_1 - EC(S_{out}) - S_{N,I} \times G_I(f))$$
$$= E_{ind,I}(f) \times (S_{in,I} + S_M \times R_1 - EC(AGC(S_M - S_N \times G(f))) - S_{N,I} \times G_I(f))$$

ausgedrückt werden und kann das rechte Hörsignal $S_{H,r}$ durch die Formel

$$S_{H,r} = E_{ind,r}(f) \times (S_{in,r} + S_M \times R_1 - EC(S_{out}) - S_{N,r} \times G_r(f))$$
$$= E_{ind,r}(f) \times (S_{in,r} + S_M \times R_1 - EC(AGC(S_M - S_N \times G(f))) - S_{N,r} \times G_r(f))$$

ausgedrückt werden, wobei ohne Ausgleich der Hörschwäche des linken und/oder rechten Ohres die Funktionen $E_{ind,l}(f)$ und/oder $E_{ind,r}(f)$ zu 1 gesetzt werden. Durch einen Ausgleich der Hörschwäche des linken und/oder rechten Ohres kann man eine verbesserte Lokalisation eines Geräusches erreichen, beispielsweise in einem Auto, was der Verständlichkeit der Sprache dient.

Wie in Fig. 2 durch strichpunktierte Linien angedeutet, sind das Sprechmikrofon 10 und das allgemeine Umgebungsmikrofon 12 in dieser Ausführungsform baulich vereinigt. Dies kann beispielsweise, aber nicht nur, in Form eines Doppelmikrofons mit entgegengesetzter Richtcharakteristik verwirklicht sein. Desweiteren sind der Lautsprecher 18 und das linke Ohrschallmikrofon 21 baulich vereinigt und sind der rechte Lautsprecher 29 und das rechte Ohrschallmikrofon 23 baulich vereinigt. Eine derartige bauliche Vereinigung kann beispielsweise, aber nicht nur, durch Einbau in einer Kopfhörerschale der jeweiligen Seite oder in einem Ohrstück (Earpiece) in der Art eines Ohrstöpsels oder einer Otoplastik verwirklicht sein, wobei eine Abstrahlrichtung des Lautsprecher 18, 29 jeweils zu einem Ohr eines Trägers hin gerichtet ist und eine Richtcharakteristik des Ohrschallmikrofons 21, 23 von dem Ohr des Trägers weg weist.

In dem ersten wie auch in dem zweiten Ausführungsbeispiel sind die in dem Signalverarbeitungsblock 100, 200 jeweils dargestellten Elemente als Bauteile (Schaltelemente, Leitungen, Lötpunkte etc.) einer physikalisch verwirklichten Schaltungsanordnung oder als Verarbeitungsschritte eines Signalverarbeitungsverfahrens interpretierbar.

<Drittes Beispiel>

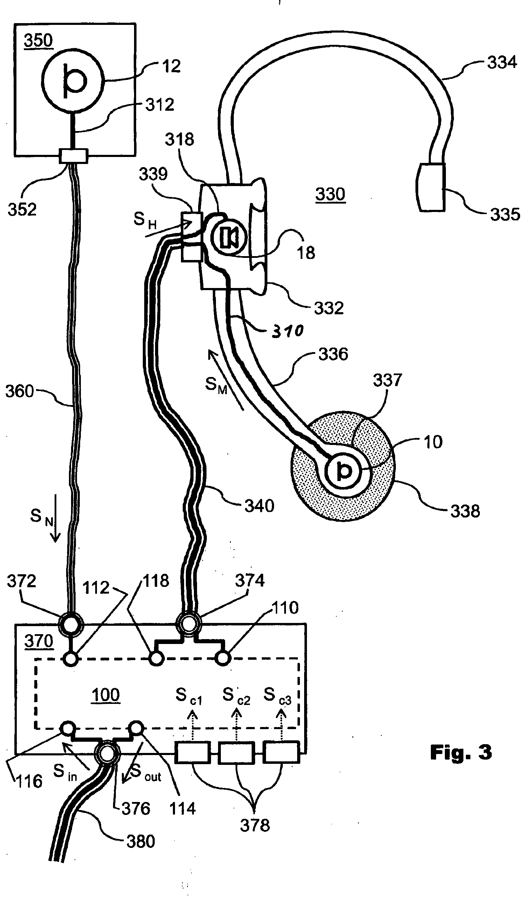

Fig. 3 zeigt ein drittes Beispiel, bei welchem der Signalverarbeitungsblock 100 des ersten Beispiels mit einer Sprachgarnitur 330 im Rahmen eines Konferenzsystems verwendet wird.

Im Einzelnen ist gemäß der Darstellung in Fig. 3 eine Sprachgarnitur 330 mit einer Hörmuschel 332, einem Kopfbügel 334 und einem Druckstück 335 vorgesehen, wobei der Lautsprecher 18 (vgl. auch Fig. 1) in der Hörmuschel 332 angeordnet ist. Von der Hörmuschel 332 ragt ein Wangenbügel 336 ab, dessen Ende in einer Mikrofonaufnahme 337 mündet, in welcher das Sprechmikrofon 10 (vgl. auch Fig. 1) angeordnet ist. Die Mikrofonaufnahme 337 ist von einem Wind- oder Poppschutz 338 umhüllt. Eine Lautsprecherleitung 318, die an dem Lautsprecher 18 angeschlossen ist, und eine Mikrofonleitung 310, die an dem Sprechmikrofon 10 angeschlossen ist, erstrecken sich durch eine Zugentlastung 339, die außen an der Hörmuschel 332 angebracht ist, hindurch und setzen sich als Adern eines Kopfhörerkabels 340 fort. Die Sprachgarnitur 330 ist so ausgestaltet, dass die Hörmuschel 332 an einem Ohr eines Trägers der Sprachgarnitur 330 anliegt, während das Druckstück 335 oberhalb eines gegenüberliegenden Ohres des Trägers am Kopf anliegt und die Hörmuschel 332 und das Druckstück 335 unter der Spannung des Kopfbügels 334 an den Kopf des Trägers gedrückt werden, wodurch die Sprachgarnitur 330 am Kopf des Trägers gehalten wird. Die Hörmuschel 332 kann offen oder geschlossen ausgeführt sein. Der Wangenbügel 336 erstreckt sich entlang einer Wange des Trägers der Sprachgarnitur 330 zum Mund hin, sodass das Sprechmikrofon 10 sich nahe an dem Mund des Sprechers befindet, um Sprache des Trägers der Sprachgarnitur 330 klar aufzufangen. Der Poppschutz 338 dient der Abdämpfung von störenden Windgeräuschen oder stark aspirierten Lautäußerungen, die von einem Mikrofon oft überlaut umgewandelt werden, und ist beispielsweise aus einem Schaumstoff hergestellt. Der Poppschutz 338 ist abnehmbar und kann auch aus hygienischen Gründen ausgetauscht werden, wenn die Sprachgarnitur 330 von mehreren Trägern benutzt wird.

In der Nähe der Sprachgarnitur 330, etwa an einer Wand oder auf einem Schreibtisch oder dergleichen, ist ein Mikrofongehäuse 350 angeordnet. Das Mikrofongehäuse 350 nimmt das Umgebungsmikrofon 12 (vgl. auch Fig. 1) auf und ist so angeordnet, dass Umgebungsgeräusche, die auch das Sprechmikrofon 10 der Sprachgarnitur 330 erreichen können, aufgenommen werden, während Sprachschall des Trägers der Sprachgarnitur 330 nicht oder in weitaus geringerem Maße aufgenommen werden als durch das Sprechmikrofon 10. An dem Umgebungsmikrofon 12 ist eine Umgebungssignalleitung 312 angeschlossen, die sich durch eine Zugentlastung 352 des Mikrofongehäuses 350 hindurch erstreckt und in einem Mikrofonkabel 360 fortsetzt.

Die Lautsprecherleitung 318, die Mikrofonleitung 310 und die Umgebungssignalleitung 312 enden jeweils an einem Schaltkasten 370. Genauer gesagt, ist das Mikrofonkabel mit der Umgebungssignalleitung 312 an einer Kabelanschlussbuchse 372 des Schaltkastens 370 angeschlossen, und ist das Kopfhörerkabel mit der Mikrofonleitung (auch als Sprechleitung bezeichnet) 310 und der Lautsprecherleitung 318 an einer Kabelanschlussbuchse 374 des Schaltkastens 370 angeschlossen. Darüber hinaus ist ein Konferenzanschlusskabel 380 mit einer Sendeleitung und einer Empfangsleitung (jeweils nicht näher dargestellt) an einer Kabelanschlussbuchse 376 des Schaltkastens 370 angeschlossen.

Wie in Fig. 3 gezeigt, nimmt der Schaltkasten 370 den Signalverarbeitungsblock 100 des ersten Beispiels (vgl. Fig. 1) auf, der auch als eine Signalverarbeitungsschaltung 100 bezeichnet werden kann. Dabei ist der Mikrofoneingang 112 des Verarbeitungsblocks 100 mit der Kabelanschlussbuchse 372 des Schaltkastens 370 verbunden, sind der Mikrofoneingang 110 und der Lautsprecherausgang 118 des Verarbeitungsblocks 100 mit der Kabelanschlussbuchse 374 des Schaltkastens 370 verbunden, und sind der Sendesignalausgang 114 und der Empfangssignaleingang 116 mit der Kabelanschlussbuchse 376 des Schaltkastens 370 verbunden. Somit ist über die Mikrofonleitung 310 ein Sprachsignal $S_M$, das in dem Sprechmikrofon 10 erzeugt wird, an den Schaltkasten 370 übertragbar, ist über die Lautsprecherleitung 318 ein Hörsignal $S_H$ von dem Schaltkasten 370 aus an den Lautsprecher 18 übertragbar, ist über die Umgebungssignalleitung 312 ein Umgebungssignal $S_N$, das in dem Umgebungsmikrofon 12 erzeugt wird, an den Schaltkasten 370 übertragbar, und sind über das Konferenzanschlusskabel 380 ein Sendesignal $S_{out}$ von dem Schaltkasten 370 aus an eine nicht näher dargestellte externe Stelle und ein Empfangssignal $S_{in}$ von der externen Stelle an den Schaltkasten 370 übertragbar.

Des Weiteren weist der Schaltkasten 370 drei Drehregler 378 auf, welche Steuersignale $S_{c1}$, $S_{c2}$ und $S_{c3}$ auf eine Betätigung hin bzw. entsprechend ihrer Drehstellung erzeugen. Die Steuersignale $S_{c1}$, $S_{c2}$ und $S_{c3}$ werden dem Signalverarbeitungsblock 100 über nicht näher dargestellte Anschlusspunkte zugeleitet.

Der Signalverarbeitungsblock 100 mit seinem Ein- und Ausgängen 110, 112, 114, 116 und 118, das Sprechmikrofon 10, das Umgebungsmikrofon 12, der Lautsprecher 18 sowie die Signale $S_M$, $S_H$, $S_N$, $S_{in}$, $S_{out}$, $S_{c1}$ bis $S_{c3}$ entsprechen in Sinn, Aufbau und Wirkung völlig den Darstellungen und Beschreibungen in Bezug auf das erste Beispiel gemäß Fig. 1, sodass auf die diesbezügliche Beschreibung vollumfänglich Bezug genommen wird.

Wie aus der Beschreibung zu Fig. 1 ersichtlich, erzeugt der Signalverarbeitungsblock 100 das Sendesignal $S_{out}$ nach der Formel

$$S_{out} \quad = \quad AGC(S_M - S_N \times G(f))$$

und das Hörsignal $S_H$ nach der Formel

$$S_H \quad = \quad S_{in} + S_M \times R_1 - S_N \times R_2 \times G(f) - EC(S_{out}).$$

Mit anderen Worten, das über das Sprechmikrofon 10 aufgezeichnete Sprachsignal $S_M$ wird in das Sendesignal $S_{out}$ verarbeitet, indem das durch das Umgebungsmikrofon 12 erzeugte und mit einer geeigneten Dämpfungsfunktion $G(f)$ gedämpfte Umgebungssignal $S_N$ von dem Sprachsignal $S_M$ subtrahiert wird und das Ergebnis schließlich einer automatischen Pegelanpassung (Automatic Game Control - AGC) unterzogen wird. Andererseits wird das Empfangssignal $S_{in}$ in das Hörsignal $S_H$ verarbeitet, indem das mit einem geeigneten Dämpfungs- oder Verstärkungsfaktor $R_1$ beaufschlagte Sprachsignal $S_M$ zu dem Empfangssignal $S_{in}$ addiert wird und das Umgebungssignal $S_N$ nach geeigneter Dämpfung abgezogen wird, wobei zusätzlich eine Echokompensation dergestalt vorgesehen ist, dass das eigene Sendesignal $S_{out}$ nach geeigneter Verzögerung und Dämpfung von dem Empfangssignal $S_{in}$ subtrahiert wird, um mögliche Widerhalleffekte des eigenen Sendesignals $S_{out}$ in dem Empfangssignal $S_{in}$ zu unterdrücken.

Somit erhält ein Anwender bzw. Träger der Sprachgarnitur 330 auch in einer lauten Umgebung einen ausreichenden Höreindruck von der eigenen Stimme. Dabei können das Umgebungsgeräusch und die eigene Stimme je nach Situation unterschiedlich gedämpft (die eigene Stimme gegebenenfalls auch verstärkt) werden, sodass der Träger gegenüber dem Umgebungsgeräusch nicht völlig taub sein muss. Andererseits kann der Träger über die Drehregler die Umgebungsgeräusche so weit dämpfen, dass eine Ablenkung von dem Gespräch weitgehend ausgeschlossen ist.

Die Sprachgarnitur 330 gemäß diesem Beispiel ist in einer Vielzahl von Anwendungsbereichen einsetzbar, wie etwa gemäß vorstehender Beschreibung in einer Konferenzschaltung bzw. in einem Konferenzsystem mit einer Vielzahl von Teilnehmern. Die Anwendung ist aber nicht hierauf beschränkt, sondern umfasst auch Anwendungen an einem Headset für ein Mobiltelefon oder ein Funkgerät, für den Arbeitsplatz eines Simultanübersetzers, eines Sportkommentators in einem Stadion oder an einer sonstigen Sportveranstaltungsstätte, eines Journalisten bzw. Korrespondenten in einer lauten Umgebung, und vergleichbare Situationen, einer Sprecher- bzw. Übersetzerkabine, eines Übertragungswagens, einer Telefonzentrale oder dergleichen.

Die Hörmuschel 332 kann schallgekapselt sein, und an dem Druckstück 335 oder anstelle desselben kann ebenfalls eine Gehörschutzkapsel vorgesehen sein. In diesem Fall eignet sich die beschriebene Anordnung auch zur Anwendung in einer sehr lauten Umgebung wie etwa einer Pilotenkanzel eines Hubschraubers oder Flugzeugs, einer Baumaschine oder dergleichen, in lauter Industrieumgebung, in Diskotheken oder dergleichen.

In einer Abwandlung kann auch an dem zweiten Ohr ein Lautsprecher vorgesehen sein, sodass ein einkanaliges Empfangssignal $S_{in}$ gleichermaßen über beide Ohren gehört werden kann oder ein Stereo-Empfangssignal $S_{in}$ nach beschriebener Verarbeitung auf beide Ohren bzw. Lautsprecher verteilt werden kann.

Anstelle von Kabelverbindungen 340, 360, 380 können auch Funkverbindungen wie etwa über BlueTooth, Infrarot, Ultraschall oder andere Funkstandards vorgesehen sein.

In dem Schaltkasten 370 können mehrere Signalverarbeitungsblöcke 100 zur Verarbeitung von Signalen einer Vielzahl von Konferenzteilnehmern angeordnet sein. Dabei können die Empfangs- und Sendesignalanschlüsse 114, 116 mit einem Konferenzsteuerungsmodul verbunden sein, welches als ein Kommunikationsnetz verstanden werden kann.

<Viertes Beispiel>

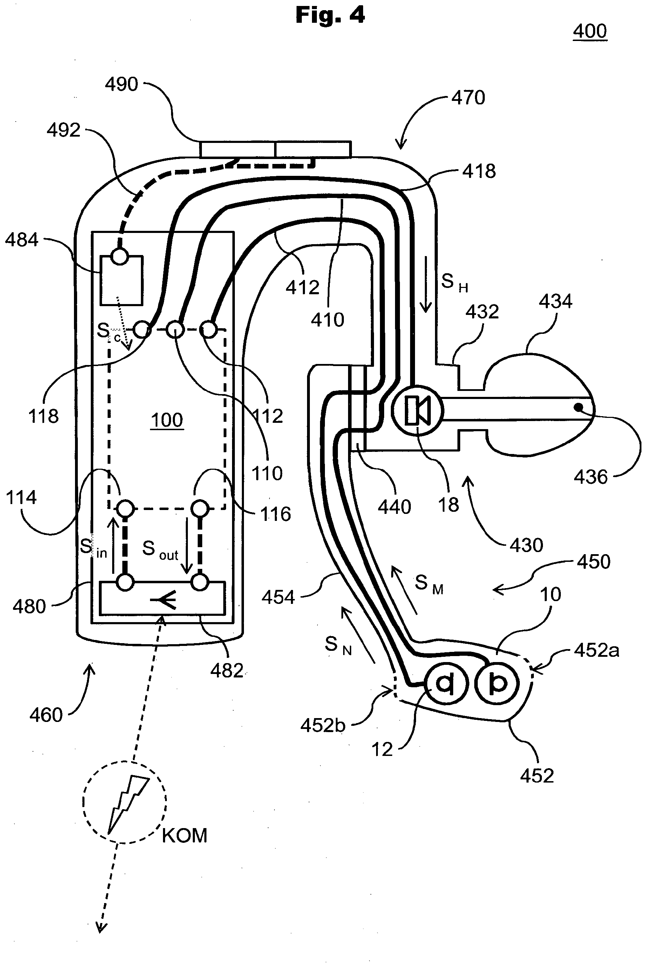

Fig. 4 zeigt als ein viertes Beispiel ein Funk-Headset 400, das in Kompakt- bzw. Tarnbauweise ausgeführt ist und beispielsweise im Zusammenhang mit einem nicht näher dargestellten Mobiltelefon, Funkgerät oder einer Freisprecheinrichtung verwendbar ist. Bei diesem Funk-Headset sind der Signalverarbeitungsblock 100 und sämtliche anderen Elemente des ersten Beispiels gemäß Fig. 1 eingebaut.

Das Headset 400 weist ein Ohrstück 430 mit einem Gehäuseteil 432 und einem Ohranpassteil 434 auf, wobei der Gehäuseteil 432 den Lautsprecher 18 aufnimmt und wobei der Ohranpassteil 434 zum Einführen in einen Gehörgang eines Ohres eines Trägers des Headsets 400 geeignet ausgebildet ist. Ein Luftkanal 436 erstreckt sich von dem Lautsprecher 18 in dem Gehäuseteil 432 aus durch das Ohranpassteil 434 hindurch, sodass durch den Lautsprecher 18 erzeugte Schallwellen ungehindert in den Gehörgang des Trägers übertragen werden können.

Über ein Drehgelenk 440, das an dem Gehäuseteil 432 des Ohrstücks 430 angebracht ist, ist ein Wangenstück 450 angelenkt. Das Wangenstück 450 weist eine Mikrofonaufnahme 452 und einen Bügel 454, der die Mikrofonaufnahme 452 mit dem Drehgelenk 440 verbindet, auf. Die Mikrofonaufnahme 452 nimmt das Sprechmikrofon 10 und das Umgebungsmikrofon 12 auf. In einer Wandung der Mikrofonaufnahme 452 sind Perforationen bzw. Durchbrüche 452a, 452b vorgesehen, die einen Eintritt von Schall zu dem Sprechmikrofon 10 bzw. dem Umgebungsmikrofon 12 erleichtern. Das Sprechmikrofon 10 und das Umgebungsmikrofon 12 sind als Doppelmikrofoneinheit mit entgegengesetzten Richtcharakteristiken (also entgegengesetzten Schallannahmerichtungen) ausgebildet. Die Perforationen 452a, 452b liegen jeweils wenigstens in etwa in Fortsetzung der Schallannahmerichtungen der Mikrofone 10, 12 und unterstützen die Richtwirkung derselben. Die Schallannahmerichtung des Sprechmikrofons 10 und die zugehörigen Perforationen 452a sind einer angenommenen Mundposition eines Trägers des Headsets 400 zugewandt, während die Schallannahmerichtung des Umgebungsmikrofons 12 und die zugehörigen Perforationen 452b in die entgegengesetzte Richtung weisen. Durch diese Anordnung kann auch gewährleistet werden, dass das Sprechmikrofon 10 bevorzugt den Sprechschall eines Trägers des Headsets 400 aufnimmt (wobei Umgebungsgeräusche naturgemäß mit enthalten sind), während das Umgebungsmikrofon 12 den Umgebungsschall aufnimmt, den Sprechschall des Trägers aber gezielt ausblendet bzw. von diesem abgeschirmt ist.

Das Headset weist ferner ein Hinterohrstück 460 und ein Verbindungsstück 470 auf. Das Verbindungsstück 470 verbindet das Hinterohrstück 460 mit dem Ohrstück 430. Das Verbindungsstück 470 und das Hinterohrstück 460 sind so ausgebildet, dass das Hinterohrstück 460 bequem hinter dem Ohr des Trägers getragen werden kann, während sich das Verbindungsstück 470 über das Ohr hinweg erstreckt bzw. sich an einer oberen Außenseite des Ohres abstützt, wenn das Ohrstück 430 in die Ohrmuschel des Trägers eingesetzt ist. Im Übrigen sind ohne Beschränkung der Allgemeinheit das Ohrstück 430, das Verbindungsstück 470 und das Hinterohrstück 460 einstückig ausgebildet.

Das Hinterohrstück 460 nimmt ein Schaltmodul 480 auf, welches einen Antennenblock 482, einen Steuersignalblock 484 und den Signalverarbeitungsblock 100 aufnimmt. Der Antennenblock 482 ist zum Senden und Empfangen von Signalen über eine Funkschnittstelle mit einer Gegenstelle wie etwa einem Mobiltelefon oder sonstigen oben genannten Gerät ausgebildet und eingerichtet. Eine Funkverbindung des Antennenblocks 482 mit einer Gegenstelle ist gestrichelt dargestellt und mit der Bezeichnung KOM symbolisiert.

Der Signalverarbeitungsblock 100 ist in Fig. 1 im Einzelnen dargestellt und wurde in Aufbau, Funktion und Wirkung im Zusammenhang mit dem ersten Beispiel bereits beschrieben. Der Mikrofoneingang 110 des Signalverarbeitungsblocks 100 ist über eine Sprachsignalleitung 410 mit dem Sprechmikrofon 10 verbunden, sodass ein durch das Sprechmikrofon 10 erzeugtes Sprachsignal $S_M$ an dem Mikrofoneingang 110 des Signalverarbeitungsblocks 100 anliegt. Der Mikrofoneingang 112 des Signalverarbeitungsblocks 100 ist über eine Umgebungssignalleitung 412 mit dem Umgebungsmikrofon 12 verbunden, sodass ein durch das Umgebungsmikrofon 12 erzeugtes Umgebungssignal $S_N$ an dem Mikrofoneingang 112 des Signalverarbeitungsblocks 100 anliegt. Der Hörsignalausgang 118 des Signalverarbeitungsblocks ist über eine Hörsignalleitung 418 mit dem Lautsprecher 18 verbunden, sodass ein über den Lautsprecherausgang 118 des Signalverarbeitungsblocks 100 ausgegebenes Hörsignal $S_H$ an den Lautsprecher 18 übertragen wird. Der Empfangssignaleingang 116 und der Sendesignalausgang 114 des Signalverarbeitungsblocks 100 sind mit dem Antennenblock 482 des Schaltmoduls 480 verbunden, sodass Empfangs- und Sendesignale $S_{in}$, $S_{out}$ zwischen dem Signalverarbeitungsblock 100 und dem Antennenblock 482 ausgetauscht werden können.

Wie in Fig. 4 dargestellt, ist eine Tastereinheit 490 mit einer Mehrzahl von Tasten an einer Oberseite des Verbindungsstücks 470 vorgesehen. Die Tasten der Tastereinheit 490 sind zur Bedienung durch den Träger des Headsets 400 zugänglich, ohne dass das Headset 400 abgenommen werden muss. Durch Betätigung der Tasten der Tastereinheit 490 sind Steuersignale $S_c$ dem Schaltmodul 480 zuführbar. Die Steuersignale $S_c$ beinhalten sowohl Steuersignale $S_{c1}$ bis $S_{c3}$ zur Beeinflussung von Charakteristiken der Dämpfungsglieder 122, 142, 150 (vgl. Fig. 1) des Signalverarbeitungsblocks 100 als auch Steuersignale zum Initiieren oder Beenden einer Sprechfunkverbindung über den Antennenblock 482 und zur Erhöhung oder Erniedrigung einer Gesamtsignalstärke des Hörsignals $S_H$, wobei bestimmte Steuersignale auch über den Antennenblock 482 an die Gegenstelle wie etwa ein Mobiltelefon etc. gesendet werden können, um dort in geeigneter Weise Steuerungsvorgänge auszulösen.

Die Verarbeitung des Sprachsignals $S_M$ zu dem Sendesignal $S_{out}$ sowie die Verarbeitung des Empfangssignals $S_{in}$ zu dem Hörsignal $S_H$ entsprechen den Verarbeitungen, die im Zusammenhang mit dem ersten und dem dritten Beispiel beschrieben wurden, sodass insoweit hierauf Bezug genommen werden kann.

<Fünftes Ausführungsbeispiel>

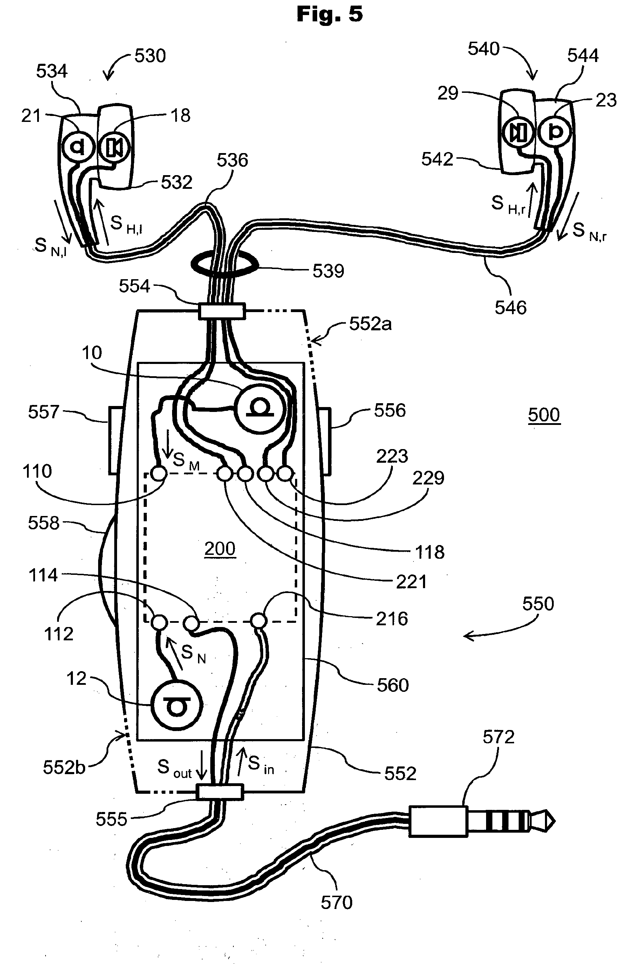

Fig. 5 zeigt als ein fünftes Ausführungsbeispiel der vorliegenden Erfindung ein Stereo-Headset 500, das beispielsweise im Zusammenhang mit einem nicht näher dargestellten Mobiltelefon, Funkgerät oder einer Freisprecheinrichtung verwendbar ist. Bei diesem Headsetz sind der Signalverarbeitungsblock 200 und sämtliche anderen Elemente des zweiten Ausführungsbeispiels gemäß Fig. 2 eingebaut.

Das Stereo-Headset 500 weist eine linke Höreinheit 530, eine rechte Höreinheit 540 und eine Sprecheinheit 550 auf. Die Sprecheinheit 550 weist ein Gehäuse 552 auf, das eine Steuerplatine 560 aufnimmt. Die Steuerplatine 560 trägt den Signalverarbeitungsblock 200. Mikrofone 10, 12, 21, 23 und Lautsprecher 18, 23 (vgl. auch Fig. 2) sind in nachstehend beschriebener Weise auf die Sprecheinheit 550 und die Höreinheiten 530, 540 verteilt.

Die linke Höreinheit 530 weist ein in einen Gehörgang eines (auslegungsgemäß linken) Ohres eines Trägers des Stereo-Headsets 500 einsetzbares Ohrstück 532 und ein damit integral ausgebildetes Griffstück 534, welches von außen ergriffen werden kann, wenn das Ohrstück 532 in den Gehörgang eingesetzt ist, auf. In der linken Höreinheit 530 sind der (linke) Lautsprecher 18 und das linke Ohrschallmikrofon 21 untergebracht. Ein linkes Hörerkabel 536 erstreckt sich zwischen einem tüllenartigen Fortsatz des Griffstücks 534 der linken Höreinheit 530 und einer Zugentlastung 554 der Sprecheinheit 550. Das linke Hörerkabel 536 weist eine Lautsprecherleitung, welche den linken Lautsprecher 18 mit dem Lautsprecheranschluss 118 des Signalverarbeitungsblocks 200 verbindet, und eine Mikrofonleitung, die das linke Ohrschallmikrofon 21 mit dem Mikrofonanschluss 221 des Signalverarbeitungsblocks 200 verbindet, auf, sodass ein durch das linke Ohrschallmikrofon 21 erzeugtes linkes Ohrsignal $S_{N,l}$ dem Mikrofoneingang 221 des Signalverarbeitungsblocks 200 zugeführt wird und ein durch den Signalverarbeitungsblock 200 erzeugtes linkes Hörsignal $S_{H,l}$ von dem linken Lautsprecherausgang 118 aus dem linken Lautsprecher 18 zugeführt wird.

Gleichermaßen weist die rechte Höreinheit 540 ein Ohrstück 542 und ein Griffstück 544 auf und sind in der rechten Höreinheit 540 der rechte Lautsprecher 29 und das rechte Ohrschallmikrofon 23 untergebracht. Ein rechtes Hörerkabel 546 erstreckt sich zwischen einem tüllenartigen Fortsatz des Griffstücks 544 der rechten Höreinheit 540 und der Zugentlastung 554 der Sprecheinheit 550. Das rechte Hörerkabel 546 weist eine Lautsprecherleitung, welche den rechten Lautsprecher 29 mit dem Lautsprecheranschluss 229 des Signalverarbeitungsblocks 200 verbindet, und eine Mikrofonleitung, die das rechte Ohrschallmikrofon 23 mit dem Mikrofonanschluss 223 des Signalverarbeitungsblocks 200 verbindet, auf, sodass ein durch das rechte Ohrschallmikrofon 23 erzeugtes rechtes Ohrsignal $S_{N,r}$ dem Mikrofoneingang 223 des Signalverarbeitungsblocks 200 zugeführt wird und ein durch den Signalverarbeitungsblock 200 erzeugtes rechtes Hörsignal $S_{H,r}$ von dem rechten Lautsprecherausgang 229 aus dem rechten Lautsprecher 29 zugeführt wird. Das linke Hörerkabel 536 und das rechte Hörerkabel 546 werden durch einen Bündelungsring 539 gefasst, der die Kabel 536, 546 eng, aber verschiebbar umschließt.

Auf der Steuerplatine 560 im Inneren der Sprecheinheit 550 sind das Sprechmikrofon 10 und das Umgebungsmikrofon 12 derart befestigt, dass das Sprechmikrofon 10 im Bereich von Gehäusedurchbrüchen bzw. Perforationen 552a an einem oberen Ende des Gehäuses 552 und das allgemeine Umgebungsmikrofon 12 im Bereich von Gehäusedurchbrüchen bzw. Perforationen 552b an einem unteren Ende des Gehäuses 552 zu liegen kommt. Dabei sind die Mikrofone 10, 12 so ausgerichtet, dass ihre Schallannahmerichtungen zu den jeweiligen Perforationen 552a, 552b hin weisen. Durch diese Anordnung kann auch gewährleistet werden, dass das Sprechmikrofon 10 bevorzugt den Sprechschall eines Trägers des Headsets 500 aufnimmt (wobei Umgebungsgeräusche naturgemäß mit enthalten sein können), während das Umgebungsmikrofon 12 den Umgebungsschall aufnimmt, den Sprechschall des Trägers aber gezielt ausblendet. Das Sprechmikrofon 10 ist über eine Leitung direkt mit dem Mikrofoneingang 110 des Signalverarbeitungsblocks 200 verbunden und das Umgebungsmikrofon 12 ist über eine Leitung direkt mit dem Mikrofoneingang 112 des Signalverarbeitungsblocks 200 verbunden, sodass ein durch das Sprechmikrofon 10 erzeugtes Sprachsignal $S_M$ dem Mikrofoneingang 110 zugeführt wird und das allgemeine Umgebungssignal $S_N$ dem Mikrofoneingang 112 zugeführt wird.

Über eine weitere Zugentlastung 555 der Sprecheinheit 550 ist ein Anschlusskabel 570 in das Innere der Sprecheinheit 550 geführt. Das Anschlusskabel 570 weist eine einadrige Ausgangsleitung, die mit dem Sendesignalanschluss 112 des Signalverarbeitungsblocks 200 verbunden ist, und eine zweiadriges Empfangssignalleitung, die mit dem Stereo-Emfangssignalanschluss 216 des Signalverarbeitungsblocks 200 verbunden sind, auf. Das Anschlusskabel 570 endet in einem Stecker 572, der ohne Beschränkung der Allgemeinheit ein vierpoliger Klinkenstecker ist. Ein vierpoliger Klinkenstecker ist zur Verwendung mit Stereo-Headsets weit verbreitet und weist üblicherweise eine Verdrahtung auf, bei welcher eine Spitze einem linken Eingangssignal, ein erster darauf folgender Kontaktring einem rechten Eingangssignal, der zweite oder der dritte Kontaktring einem Ausgangssignal und der verbleibende Kontaktring einer Masse zugeordnet ist. Somit können über Anschlusskabel 570 das zweikanalige Empfangssignal $S_{in}$ und das Sendesignal $S_{out}$ gemäß der Beschreibung zu dem zweiten Ausführungsbeispiel mit einer nicht näher dargestellten Gegenstelle ausgetauscht werden.

Wie in Fig. 5 dargestellt, weist die Sprecheinheit 550 zwei Tasten 556, 557 und ein Stellrad 558 auf, die jeweils an Seiten des Gehäuses 552 zugänglich sind. Die Tasten 556, 557 und das Stellrad 558 sind zur Bedienung durch den Träger des Headsets 500 vorgesehen. Betätigungsvorgänge bzw. Stellpositionen der Tasten 556, 557 und des Stellrads 558 werden durch einen nicht näher dargestellten Steuersignalblock, der auf der Steuerplatine 560 angeordnet ist, interpretiert und in Steuersignale $S_c$, die dem Signalverarbeitungsblock 200 zuführbar sind, umgesetzt. Die Steuersignale $S_c$ beinhalten die Steuersignale $S_{c1}$ bis $S_{c6}$ zur Beeinflussung von Charakteristiken der Dämpfungsglieder 122, 142, 254, 255 (vgl. Fig. 2) und des Echokompensationsgliedes 146 des Signalverarbeitungsblocks 200 gemäß der Beschreibung zu dem zweiten Ausführungsbeispiel. Zusätzlich können auch Steuersignale für einen nicht näher dargestellten Verbindungssteuerungsblock zum Initiierten oder Beenden einer Sprechfunkverbindung und Steuersignale für einen nicht näher dargestellten Verstärkerblock zur Erhöhung oder Erniedrigung einer Gesamtsignalstärke der Hörsignals $S_{H,l}$, $S_{H,r}$, und/oder Steuersignale, die über das Anschlusskabel 570 an die Gegenstelle wie etwa ein Mobiltelefon etc. gesendet werden können, um dort in geeigneter Weise Steuerungsvorgänge auszulösen, generiert werden.

Aufbau und Funktionsweise des Signalverarbeitungsblocks 200, der Mikrofone 10, 12, 21, 23 und Lautsprecher 18, 29 sowie dadurch erzielbare Wirkungen wurden in Fig. 2 im Einzelnen dargestellt und im Zusammenhang mit dem zweiten Ausführungsbeispiel ausführlich beschrieben. Auf die Darstellung und Beschreibung des zweiten Ausführungsbeispiels gemäß Fig. 2 wird insoweit vollumfänglich Bezug genommen. Insbesondere wird das Sprachsignal $S_M$ durch eine Verarbeitung in das Sendesignal $S_{out}$ umgewandelt, wobei die Verarbeitung durch die Formel

$$S_{out} = AGC(S_M - S_N \times G(f))$$

ausgedrückt werden kann, und wird das Empfangssignal $S_{in}$ durch eine Verarbeitung in das linke und rechte Hörsignal $S_{H,l}$ und $S_{H,r}$ umgewandelt, wobei die Verarbeitung durch die Formeln

$$S_{H,l} = S_{in,l} + S_M \times R_1 - EC(S_{out}) - S_{N,l} \times G_l(f)$$

bzw.

$$S_{H,r} = S_{in,r} + S_M \times R_1 - EC(S_{out}) - S_{N,r} \times G_r(f)$$

ausgedrückt werden kann.

Die vorliegende Erfindung wurde vorstehend anhand bevorzugter Ausführungsbeispiele beschrieben und zeichnerisch dargestellt. Es ist indessen darauf hinzuweisen, dass die vorliegende Erfindung allein durch die unabhängigen Patentansprüche definiert ist und die vorstehenden Ausführungsbeispiele, Abwandlungen und Weiterbildungen nur der beispielhaften Illustration dienen. Nicht alle vorstehend beschriebenen Elemente sind für die Anwendung und Ausführung der vorliegenden Erfindung zwingend erforderlich, sofern sie nicht in wenigstens einem unabhängigen Anspruch als obligatorisches Merkmal aufgegriffen sind. Anstelle einer Variierbarkeit können einige oder alle der Dämpfungsglieder und des Echokompensationsglieds fest vorgegebene Charakteristiken aufweisen. Den Signaleingängen können Eingangsverstärker zugeordnet sein, und den Hörsignalausgängen können Ausgangsverstärker zugeordnet sein.

Im Sinne der vorliegenden Erfindung entsprechen die Signalverarbeitungsblöcke 100, 200 jeweils einem Verfahren oder einer Vorrichtung zur Steuerung einer Sprachkommunikation einer ersten Person mit wenigstens einer zweiten Person über ein Kommunikationsnetz, entspricht die Sendeseite 102, 202 jeweils einem Verfahrensschritt eines Erzeugens eines Sendesignals unter Verarbeitung eines Sprachsignals, entspricht die Empfangsseite 104, 204 jeweils einem Verfahrensschritt eines Erzeugens eines Hörsignals unter Verarbeitung des Empfangssignals, entspricht das Umgebungssignal $S_N$ einem allgemeinen Umgebungssignal, entsprechen das linke und rechte Ohrsignal $S_{N,l}$ und $S_{N,r}$ einem speziellen Umgebungssignal, entspricht das Sprechmikrofon 10 einem ersten Mikrofon, entspricht der Mikrofoneingang 110 einem Verfahrensschritt zum Erhalten eines Sprachsignals, entspricht der Sendesignalausgang 114 einem Verfahrensschritt eines Übergebens des Sendesignals an das Kommunikationsnetz, entspricht der Empfangssignaleingang 116, 216 einem Verfahrensschritt eines Erhaltens eines Empfangssignals von dem Kommunikationsnetz, entspricht der Lautsprecherausgang 118, 229 einem Verfahrensschritt eines Übergebens des Hörsignals an einen Lautsprecher, entsprechen Verzweigungsstellen 126, 128, 130 einem Verfahrensschritt eines Abzweigens, entsprechen Addierglieder 120, 140, 144, 240, 244, 148, 249 einem Verfahrensschritt eines Addierens von Signalen (oder eines Subtrahierens von Signalen, wenn ein Signaleingang des Addierglieds negativ bzw. negativ ist), entsprechen Dämpfungsglieder 122, 142, 150, 254, 255 einem Verfahrensschritt eines Unterziehens eines Signals einer Dämpfung oder Verstärkung, entspricht das Echokompensationsglied 146 einem Verfahrensschritt eines Unterziehens eines Signals einer Echokompensation, entspricht der Mikrofoneingang 112 einem Verfahrensschritt eines Erhaltens eines allgemeinen Umgebungssignals, entspricht das (allgemeine) Umgebungsmikrofon 12 einem zweiten Mikrofon, entsprechen die Ohrschallmikrofone 21, 23 einem dritten Mikrofon, entsprechen die Mikrofoneingänge 221, 223 einem Verfahrensschritt eines Erhaltens eines speziellen Umgebungssignals, entsprechen die Steuersignale einer Variabilität von Dämpfungs-, Verstärkungs- oder Verzögerungseigenschaften.

In weiteren, zeichnerisch nicht dargestellten Abwandlungen der vorliegenden Erfindung kann zur Kompensation des Umgebungssignals im Hörsignal das Umgebungssignal (allgemeine Umgebungssignal) $S_N$ in Fig. 1 bereits vor dem Dämpfungsglied 122 abgegriffen werden, kann das Empfangssignal in Fig. 1 auch ein Stereo-Empfangssignal sein und kann die beschriebene Verarbeitung beide Kanäle betreffen, kann das (Mono-) Empfangssignal in Fig. 1 auf zwei Lautsprecher nach beschriebener Verarbeitung verteilt werden, kann das Empfangssignal in Fig. 2 auch ein Mono-Empfangssignal sein, das durch die beschriebene Verarbeitung in ein einziges Hörsignal oder ein zweikanaliges Hörsignal verarbeitet wird, und dergleichen mehr.

Die unter Bezug auf die dargestellten Ausführungsformen beschriebenen Merkmale der Erfindung können auch bei anderen Ausführungsformen der Erfindung vorhanden sein, außer wenn es anders angegeben ist oder sich aus technischen Gründen von selbst verbietet.

<Liste der Bezugszeichen und Symbole>

| | |
|---|---|
| 10 | Sprechmikrofon |
| 12 | (Allgemeines) Umgebungsmikrofon |
| 18 | Lautsprecher, einziger oder links |
| 21 | Ohrschallmikrofon (spezielles Umgebungsmikrofon), links |
| 23 | Ohrschallmikrofon (spezielles Umgebungsmikrofon), rechts |
| 29 | Lautsprecher, rechts |
| 100, 200 | Signalverarbeitungsblock |
| 102, 202 | Sendeseite |
| 104, 204 | Empfangsseite |
| 110, 112, 221, 223 | Mikrofoneingänge |
| 114 | Sendesignalausgang |
| 116, 216 | Empfangssignaleingang |
| 118, 229 | Lautsprecherausgänge |
| 122 | Dämpfungsglied G(f) |
| 120, 144, 148, 249 | Addierglied, subtrahierend |
| 140, 240 | Addierglied, addierend |
| 124 | Automatische Pegelsteuerung (AGC) |
| 146 | Echokompensationsglied |
| 142 | Dämpfungsglied R1 |
| 150 | Dämpfungsglied R2 |
| 252 | Kanaltrennglied (SPLT) |
| 254 | Dämpfungsglied, linker Kanal $G_l(f)$ |
| 255 | Dämpfungsglied, rechter Kanal $G_r(f)$ |
| 310 | Sprechsignalleitung |
| 312 | Umgebungssignalleitung |
| 318 | Hörsignalleitung |
| 330 | Sprachgarnitur |
| 332 | Hörmuschel |
| 334 | Kopfbügel |
| 335 | Druckstück |
| 336 | Wangenbügel |
| 337 | Mikrofonaufnahme |
| 338 | Wind- bzw. Poppschutz |
| 339 | Zugentlastung |

| | |
|---|---|
| 340 | Kopfhörerkabel |
| 350 | Mikrofongehäuse |
| 352 | Kabeldurchführung |
| 360 | Mikrofonkabel |
| 370 | Schaltkasten |
| 372-376 | Kabelbuchsen |
| 378 | Drehregler |
| 380 | Konferenzverbindungskabel |
| 400 | Headset |
| 410 | Sprechmikrofonleitung |
| 412 | Umgebungsmikrofonleitung |
| 418 | Lautsprecherleitung |
| 430 | Ohrstück |
| 432 | Gehäuseteil |
| 434 | Ohranpassteil |
| 436 | Luftkanal |
| 440 | Drehgelenk |
| 450 | Mundstück |
| 452 | Mikrofonaufnahme |
| 452a, 452b | Perforation |
| 454 | Ausleger |
| 460 | Hinterohrstück |
| 470 | Verbindungsstück |
| 480 | Schaltmodul |
| 482 | Antennenblock |
| 484 | Steuersignalblock |
| 490 | Tastereinheit |
| 492 | Steuersignalleitung |
| 500 | Headset |
| 530 | Höreinheit links |
| 532 | Ohrstück |
| 534 | Griffstück |
| 536 | Hörerkabel links |
| 539 | Bündelungsring |
| 540 | Höreinheit rechts |
| 542 | Ohrstück |
| 544 | Griffstück |
| 546 | Hörerkabel rechts |
| 550 | Sprecheinheit |
| 552 | Gehäuse |
| 552a, 552b | Perforation |
| 554, 555 | Kabeldurchführung (Zugentlastung) |
| 556, 357 | Taste |
| 558 | Stellrad |
| 560 | Steuerplatine |
| 570 | Anschlusskabel |
| 572 | Stecker |

| | |
|---|---|
| a, b, ab | Signaleingänge |
| x | Signalausgang |

| | |
|---|---|
| AGC | Automatische Pegelsteuerung (Automatic Gain Control) |
| EC | Echoauslöschung (Echo Cancellation) |
| $G(f)$, $G_l(f)$, $G_r(f)$ | Dämpfungsfunktionen |
| $R_1$, $R_2$ | Dämpfungswerte |
| $S_c$, $S_{c1}$-$S_{c6}$ | Stellsignale |
| $S_{EC}$ | Echokompensationssignal |
| $S_H$ | Hörsignal |

| $S_{H,l}$ | Hörsignal, links |
|---|---|
| $S_{H,r}$ | Hörsignal, rechts |
| $S_{in}$ | Empfangssignal |
| $S_M$ | Sprachsignal |
| $S_N$ | (Allgemeines) Umgebungssignal |
| $S_{N,l}$ | Ohrsignal (spezielles Umgebungssignal), links |
| $S_{N,r}$ | Ohrsignal (spezielles Umgebungssignal), rechts |
| $S_{out}$ | Sendesignal |

Die vorstehende Liste der Bezugzeichen und Symbole ist integraler Bestandteil der Beschreibung.

**Patentansprüche**

1. Verfahren zur Steuerung einer Sprachkommunikation einer ersten Person mit wenigstens einer zweiten Person über ein Kommunikationsnetz, mit den Schritten:

   - Erhalten (110) eines Sprachsignals ($S_M$) von einem ersten Mikrofon (10), welches zur Umwandlung von Sprachäußerungen der ersten Person ausgebildet ist;
   - Erzeugen eines Sendesignals ($S_{out}$) unter Verarbeitung des Sprachsignals ($S_M$);
   - Übergeben (114) des Sendesignals ($S_{out}$) an das Kommunikationsnetz;
   - Erhalten (116; 216) eines Empfangssignals ($S_{in}$) von dem Kommunikationsnetz;
   - Erzeugen eines Hörsignals ($S_H$; $S_{H,l}$, $S_{H,r}$) unter Verarbeitung des Empfangssignals ($S_{in}$);
   - Übergeben (118; 118, 229) des Hörsignals ($S_H$; $S_{H,l}$, $S_{H,r}$) an einen Lautsprecher (18; 18, 29), welcher zur Umwandlung des Hörsignals ($S_H$; $S_{H,l}$, $S_{H,r}$) in Schallsignale zur Wahrnehmung durch die erste Person ausgebildet ist,
   - Erhalten (112) eines allgemeinen Umgebungssignals ($S_N$) von einem zweiten Mikrofon (12), das in einer Umgebung, in welcher sich die erste Person befindet, angeordnet ist und eine von dem ersten Mikrofon (10) sich unterscheidende Schallannahmecharakteristik, insbesondere Schallannahmerichtung, aufweist;

   wobei die Verarbeitung des Sprachsignals ($S_M$) zur Erzeugung des Sendesignals ($S_{out}$) den Schritt umfasst:

   - Subtrahieren (120) des allgemeinen Umgebungssignals ($S_N$) von dem Sprachsignal ($S_M$), wobei das allgemeine Umgebungssignal ($S_N$) vor dem Subtrahieren einer variablen ($S_{c1}$) Dämpfung (122) unterzogen wird, wobei die Verarbeitung des Empfangssignals ($S_{in}$) zur Erzeugung des Hörsignals ($S_H$; $S_{H,l}$, $S_{H,r}$) die Schritte umfasst:
   - Abzweigen (126) des Sprachsignals ($S_M$);
   - Addieren (140; 240) des abgezweigten Sprachsignals ($S_M$) zu dem Empfangssignal ($S_{in}$), wobei ein Additionssignal erhalten wird, wobei das abgezweigte Sprachsignal ($S_M$) vor dem Addieren einer variablen ($S_{c2}$) Dämpfung und/oder Verstärkung (142) unterzogen wird,
   - Abzweigen (128) des allgemeinen Umgebungssignals ($S_N$) entweder vor der variablen ($S_{c1}$) Dämpfung (122) des allgemeinen Umgebungssignals ($S_N$) oder nach der variablen ($S_{c1}$) Dämpfung (122) des allgemeinen Umgebungssignals ($S_N$) und vor dem Subtrahieren (120) des allgemeinen Umgebungssignals ($S_N$) von dem Sprachsignal ($S_M$); und
   - Subtrahieren (148) des abgezweigten allgemeinen Umgebungssignals ($S_N$) von dem Additionssignal, wobei das abgezweigte allgemeine Umgebungssignal ($S_N$) vor dem Subtrahieren einer variablen ($S_{c3}$) Dämpfung (150) unterzogen wird,

   weiter aufweisend:

   - Erhalten (221, 223) eines speziellen Umgebungssignals ($S_{N,l}$, $S_{N,r}$) von einem dritten Mikrofon (21, 23), das in der Nähe eines Ohrs der ersten Person, insbesondere näher an dem Ohr der ersten Person als das zweite Mikrofon (12), angeordnet ist;

   wobei die Verarbeitung des Empfangssignals ($S_{in}$) zur Erzeugung des Hörsignals ($S_{H,l}$, $S_{H,r}$) den Schritt umfasst:

   - Subtrahieren (148, 249) des speziellen Umgebungssignals ($S_{N,l}$, $S_{N,r}$) von dem Additionssignal nach Subtraktion des abgezweigten allgemeinen Umgebungssignals ($S_{in}$), wobei das spezielle Umgebungssignal ($S_{N,l}$, $S_{N,r}$) vor dem Subtrahieren einer vorzugsweise variablen ($S_{c5}$, $S_{c6}$) Dämpfung (254, 255) unterzogen wird,

und wobei

- die Erzeugung des Hörsignals ($S_{H,l}$, $S_{H,r}$) durch den Lautsprecher und des speziellen Umgebungssignals ($S_{N,l}$, $S_{N,r}$) durch das dritte Mikrofon an wenigstens im Wesentlichen gleicher Stelle erfolgt, wobei eine Schallannahmerichtung des dritten Mikrofons (21, 23) wenigstens im Wesentlichen mit einer Schallabgaberichtung des Lautsprechers (18, 29) zusammenfällt und
- die Schallannahmecharakteristik des dritten Mikrofons (21, 23) an eine Schallannahmecharakteristik des menschlichen Ohres angepasst wird.

**2.** Verfahren gemäß Anspruch 1,
**dadurch gekennzeichnet, dass**
die Verarbeitung des Empfangssignals ($S_{in}$) zur Erzeugung des Hörsignals ($S_H$; $S_{H,l}$, $S_{H,r}$) die Schritte umfasst:

- Abzweigen (130) des Sendesignals ($S_{out}$);
- Unterziehen des abgezweigten Sendesignals ($S_{out}$) einer vorzugsweise variablen ($S_{c4}$) Echokompensation (146) zur Erzeugung eines Echokompensationssignals ($S_{EC}$), das einem erwarteten, in dem Empfangssignal ($S_{in}$) enthaltenen Echo des Sendesignals ($S_{out}$) entspricht; und
- Subtrahieren (144; 244) des Echokompensationssignals ($S_{EC}$) von dem Additionssignal ($S_{in}$).

**3.** Verfahren gemäß Anspruch 1 oder 2,
**weiter gekennzeichnet dadurch, dass** eine Filterung des allgemeinen Umgebungssignals ($S_N$) aus dem Sprachsignal ($S_M$) nur zu einem Teil erfolgt, so dass das allgemeine Umgebungssignal ($S_N$) zu einem geringen Anteil im Sendesignal ($S_{out}$) mit übertragen wird, so dass sich die wenigstens eine zweite Person auf die Situation der ersten Person einstellen kann, und
die Auslöschung des allgemeinen Umgebungssignals ($S_N$) aus dem Sprachsignal ($S_M$) im Hörsignal ($S_H$; $S_{H,l}$, $S_{H,r}$) nur auf einen gewissen Grad beschränkt wird, so dass die erste Person den Kontakt zur Umgebung nicht völlig verliert, wobei die zumindest teileweise Auslöschung erzielt wird, indem das allgemeine Umgebungssignal ($S_N$) phasengedreht auf das Hörsignal ($S_H$; $S_{H,l}$, $S_{H,r}$) aufgespielt wird.

**4.** Verfahren gemäß einem der vorstehenden Ansprüche,
**dadurch gekennzeichnet, dass**
die variable Dämpfung (122, 150) des allgemeinen Umgebungssignals ($S_N$) automatisch durch eine Steuereinheit, manuell durch die erste Person oder durch einen externen Konferenzserver eingestellt wird, wenn das Verfahren in einem Konferenzsystem angewendet wird.

**5.** Verfahren gemäß einem der vorstehenden Ansprüche,
**dadurch gekennzeichnet, dass**
die Erzeugung des Sprachsignals ($S_M$) und des allgemeinen Umgebungssignals ($S_N$) an wenigstens im Wesentlichen gleicher Stelle, vorzugsweise in der Nähe eines Mundes der ersten Person, mit unterschiedlicher Schallannahmerichtung des ersten Mikrofons (10) und des zweiten Mikrofons (12) erfolgt.

**6.** Verfahren gemäß Anspruch 5,
**dadurch gekennzeichnet, dass**
durch die Verwendung des speziellen Umgebungssignals ($S_{N,l}$, $S_{N,r}$) in der Nähe des Ohres der ersten Person zwischen einem Umgebungsschall, der an einem Wiedergabeort des Lautsprechers (18, 29), d.h. am Ohr der ersten Person, vorherrscht, und einem weiteren Umgebungsschall an einem Sprachaufnahmeort, an welchem das erste Mikrofon (10) einen Sprachschall der ersten Person aufnimmt, derart unterschieden wird, dass eine additive Ausblendung des Umgebungsschalls durch Addieren eines invertierten bzw. 180°-phasengedrehten speziellen Umgebungssignals ($S_N$) sowohl für die das Sendesignal ($S_{out}$) erhaltende zweite Person als auch für die das Hörsignal ($S_{H,l}$, $S_{H,r}$) erhaltende erste Person separat optimiert werden kann.

**7.** Verfahren gemäß Anspruch 1, **dadurch gekennzeichnet, dass** ein Equalizer ($E_{ind}(f)$; $E_{ind,l}(f)$, $E_{ind,r}(f)$) vorgesehen ist, welcher ohrspezifisch für ein linkes und/oder rechtes Ohr der ersten Person ausgeführt wird, wobei eine benutzerindividuelle Hörschwäche, z.B. eine Hörschwäche eines Hörgeräteträgers, mit diesem Equalizer ($E_{ind}(f)$; $E_{ind,l}(f)$, $E_{ind,r}(f)$) ausgeglichen wird, um die Sprachverständlichkeit zu erhöhen.

**8.** Verfahren gemäß Anspruch 7, **dadurch gekennzeichnet, dass**
Zum Ausgleichen einer benutzerspezifischen Hörschwäche der ersten Person die Funktion des Equalizers ($E_{ind}(f)$;

$E_{ind,l}(f)$, $E_{ind,r}(f)$) durch Messen des Hörspektrums der ersten Person bestimmt wird oder im Equalizer ($E_{ind}(f)$; $E_{ind,l}(f)$, $E_{ind,r}(f)$) Frequenzgänge/Frequenzverläufe derart voreingestellt werden, dass von den voreingestellten Frequenzgängen/Frequenzverläufen mindestens ein Frequenzgang/Frequenzverlauf von der ersten Person auswählbar ist.

9. Vorrichtung zur Steuerung einer Sprachkommunikation, **dadurch gekennzeichnet, dass** die Vorrichtung ausgelegt und eingerichtet ist, das Verfahren nach einem der vorstehenden Ansprüche auszuführen.

10. Verwendung der Vorrichtung nach Anspruch 9 für eine Sprech-Hör-Einheit, die ausgewählt ist aus der Gruppe, welche wenigstens umfasst:

- einen Sprechfunkhelm;
- ein Headset;
- ein Tarnhead;
- einen Kopfhörer;
- einen Ohrlautsprecher im Sinne eines Hörgeräts; und
- eine Mikrofon-Kopfhöreranordnung in einer Konferenz,

wobei die Vorrichtung in der Sprech-Hör-Einheit integriert oder separat davon ausgebildet ist.

**Claims**

1. A method for controlling voice communication of a first person with at least a second person via a communication network, including the steps:

- receiving (110) a voice signal ($S_M$) from a first microphone (10), which is designed to convert the vocal speech of the first person;
- processing the voice signal ($S_M$) to generate an outgoing signal ($S_{out}$) ;
- delivering (114) the outgoing signal ($S_{out}$) to the communication network;
- receiving (116; 216) an incoming signal ($S_{in}$) from the communication network;
- processing the incoming signal ($S_{in}$) to generate an audio signal ($S_H$, $S_{H,l}$, $S_{H,r}$) ;
- delivering (118; 118, 229) the audio signal ($S_H$, $S_{H,l}$, $S_{H,r}$) to a loudspeaker (18; 18, 29), which is designed to convert the audio signal ($S_H$, $S_{H,l}$, $S_{H,r}$) into acoustic signals to be perceived by the first person;
- receiving (112) a general environmental signal ($S_N$) from a second microphone (12), which is located in the environment containing the first person and which includes acoustic pickup characteristics differing from those of the first microphone (10), in particular with regards to the acoustic pickup direction;

wherein the processing of the voice signal ($S_M$) to generate the outgoing signal ($S_{out}$) includes the step:

- subtracting (120) the general environmental signal ($S_N$) from the voice signal ($S_M$), wherein the general environmental signal ($S_N$) is subjected to a variable ($S_{c1}$) attenuation (122) prior to the subtraction;

wherein the processing of the incoming signal ($S_{in}$) to generate the audio signal ($S_H$, $S_{H,l}$, $S_{H,r}$) includes the steps:

- splitting off (126) the voice signal ($S_M$) ;
- adding (140; 240) the split-off voice signal ($S_M$) to the incoming signal ($S_{in}$), which creates an addition signal, wherein the split voice signal ($S_M$) is subjected to a variable ($S_{c2}$) attenuation and/or amplification (142) prior to the addition;
- splitting off (128) the general environmental signal ($S_N$), either prior to the variable ($S_{c1}$) attenuation (122) of the general environmental signal ($S_N$) or after the variable ($S_{c1}$) attenuation (122) of the general environmental signal ($S_N$) and prior to the subtraction (120) of the general environmental signal ($S_N$) from the voice signal ($S_M$); and
- subtracting (148) the split-off general environmental signal ($S_N$) from the addition signal, wherein the split-off general environmental signal ($S_N$) is subjected to a variable ($S_{c3}$) attenuation (150) prior to the subtraction;

furthermore including:

- receiving (221, 223) a specific environmental signal ($S_{N,l}$, $S_{N,r}$) from a third microphone (21, 23), which is located in the vicinity of an ear of the first person, in particular closer to the ear of the first person than is the second microphone (12);

wherein the processing of the incoming signal ($S_{in}$) to generate the audio signal ($S_{H,l}$, $S_{H,r}$) includes the step:

- subtracting (148, 249) the specific environmental signal ($S_{N,l}$, $S_{N,r}$) from the addition signal after subtracting the split-off general environmental signal ($S_{in}$), wherein the specific environmental signal ($S_{N,l}$, $S_{N,r}$) is subjected to a preferably variable ($S_{c5}$, $S_{c6}$) attenuation (254, 255) prior to the subtraction;

and wherein

- generation of the audio signal ($S_{H,l}$, $S_{H,r}$) by the loudspeaker and the generation of the specific environmental signal ($S_{N,l}$, $S_{N,r}$) by the third microphone take place in at least essentially the same location, and wherein an acoustic pickup direction of the third microphone (21, 23) at least essentially matches the acoustic delivery direction of the loudspeaker (18, 29), and
- the acoustic pickup characteristics of the third microphone (21, 23) are adjusted to correspond to the acoustic pickup characteristics of the human ear.

2. The method according to Claim 1,
   **characterized in that**
   the processing of the incoming signal ($S_{in}$) for the generation of the audio signal ($S_H$; $S_{H,l}$, $S_{H,r}$) includes the steps:

   - splitting off (130) the outgoing signal ($S_{out}$);
   - subjecting the split-off outgoing signal ($S_{out}$) to a preferably variable ($S_{c4}$) echo compensation (146) to generate an echo compensation signal ($S_{EC}$), which corresponds to an expected echo of the outgoing signal ($S_{out}$) that is contained in the incoming signal ($S_{in}$); and subtracting (144; 244) the echo compensation signal ($S_{EC}$) from the addition signal ($S_{in}$).

3. The method according to Claim 1 or 2,
   **further characterized in that**
   filtering of the general environmental signal ($S_N$) from the voice signal ($S_M$) is only conducted partially, such that a lesser portion of the general environmental signal ($S_N$) is transmitted along with the outgoing signal ($S_{out}$), such that at least one second person can adjust to the situation of the first person, and
   cancellation of the general environmental signal ($S_N$) from the voice signal ($S_M$) within the audio signal ($S_H$, $S_{H,l}$, $S_{H,r}$) is limited to a certain degree only, such that the first person does not completely lose contact with the environment, wherein at least partial cancellation is achieved by feeding the general environmental signal ($S_N$) to the audio signal ($S_H$, $S_{H,l}$, $S_{H,r}$) in phase-shifted form.

4. The method according to one of the previous claims,
   **characterized in that**
   the variable attenuation (122, 150) of the general environmental signal ($S_N$) is adjusted either automatically by a control unit, manually by the first person, or by an external conference server if the method is used in a conference system.

5. The method according to one of the previous claims,
   **characterized in that**
   generation of the voice signal ($S_M$) and the general environmental signal ($S_N$) is conducted in at least essentially the same location, preferably in the vicinity of the mouth of the first person, with different acoustic pickup directions of the first microphone (10) and the second microphone (12).

6. The method according to Claim 5,
   **characterized in that**
   the use of the specific environmental signal ($S_{N,l}$, $S_{N,r}$) in the vicinity of the ear of the first person facilitates the distinction between environmental sound that prevails at the location at which the loudspeaker (18, 29) operates, that is, by the ear of the first person, and another environmental sound at a voice pickup location at which the first microphone (10) picks up voice sounds of the first person, such that an additive suppression of the environmental sounds through addition of an inverted or 180° phase-shifted specific environmental signal ($S_N$) can be optimized separately, both for the second person receiving the outgoing signal ($S_{out}$) and for the first person receiving the audio signal ($S_{H,l}$, $S_{H,r}$).

7. The method according to Claim 1,
**characterized in that**
an equalizer ($E_{ind}(f)$; $E_{ind,l}(f)$, $E_{ind,r}(f)$) is provided, which is designed ear-specifically for a left and/or right ear of the first person, wherein any hearing difficulties particular to the user, e.g. a hearing difficulty of a hearing-aid user, are compensated for with this equalizer ($E_{ind}(f)$; $E_{ind,l}(f)$, $E_{ind,r}(f)$) to increase voice intelligibility.

8. The method according to Claim 7,
**characterized in that,**
in order to compensate for the user-specific hearing difficulty of the first person, the function of the equalizer ($E_{ind}(f)$; $E_{ind,l}(f)$, $E_{ind,r}(f)$) is determined through measurements of the hearing spectrum of the first person, or the frequency responses/frequency curves of the equalizer ($E_{ind}(f)$; $E_{ind,l}(f)$, $E_{ind,r}(f)$) are pre-adjusted in such a manner that at least one frequency response/frequency curve from among the pre-adjusted frequency responses/frequency curves can be selected by the first person.

9. A device to control a voice communication,
**characterized in that**
the device is designed and equipped to execute the method according to one of the previous claims.

10. A use of the device according to Claim 9 for a voice-hearing unit that is selected from the group that at least includes:

- a voice radio helmet;
- a headset;
- an invisible headset;
- a headphone set;
- an in-ear loudspeaker in the sense of a hearing aid; and
- a microphone-headphone assembly in a conference,

wherein the device is integrated into the voice-hearing unit or is designed as a separate unit.

**Revendications**

1. Procédé de commande d'une communication vocale d'une première personne avec au moins une seconde personne par le biais d'un réseau de communication, comportant les étapes suivantes :

- l'obtention (110) d'un signal vocal ($S_M$) par un premier microphone (10) conçu pour la conversion d'expressions vocales de la première personne ;
- la génération d'un signal d'émission ($S_{out}$) par traitement du signal vocal ($S_M$) ;
- la remise (114) du signal d'émission ($S_{out}$) au réseau de communication ;
- l'obtention (116 ; 216) d'un signal de réception ($S_{in}$) par le réseau de communication ;
- la génération d'un signal audio ($S_H$ ; $S_{H,l}$, $S_{H,r}$) par traitement du signal de réception ($S_{in}$) ;
- la remise (118 ; 118, 229) du signal audio ($S_H$ ; $S_{H,l}$, $S_{H,r}$) à un haut-parleur (18 ; 18, 29) conçu pour la conversion du signal audio ($S_H$ ; $S_{H,l}$, $S_{H,r}$) en signaux sonores destinés à être perçus par la première personne,
- l'obtention (112) d'un signal ambiant général ($S_N$) par un deuxième microphone (12) disposé dans un environ dans lequel se trouve la première personne, et présente une caractéristique de réception d'un son, en particulier une direction de réception d'un son, différente du premier microphone (10) ;

dans lequel le traitement du signal vocal ($S_M$) destiné à générer le signal d'émission ($S_{out}$) comporte l'étape de :

- soustraction (120) du signal ambiant général ($S_N$), du signal vocal ($S_M$), le signal ambiant général ($S_N$) étant soumis, avant la soustraction, à une atténuation (122) variable ($S_{c1}$),

dans lequel le traitement du signal de réception ($S_{in}$) destiné à générer le signal audio ($S_H$ ; $S_{H,l}$, $S_{H,r}$) comprend les étapes suivantes :

- déviation (126) du signal vocal ($S_M$) ;

- addition (140 ; 240) du signal vocal dévié ($S_M$) au signal de réception ($S_{in}$), un signal d'addition étant obtenu, le signal vocal dévié ($S_M$) étant soumis, avant l'addition, à une atténuation et/ou amplification (142) variable ($S_{c2}$),
- déviation (128) du signal ambiant général ($S_N$), soit avant l'atténuation (122) variable ($S_{c1}$) du signal ambiant général ($S_N$), soit après l'atténuation (122) variable ($S_{c1}$) du signal ambiant général ($S_N$) et avant la soustraction (120) du signal ambiant général ($S_N$) du signal vocal ($S_M$) ; et
- soustraction (148) du signal ambiant général dévié ($S_N$) du signal d'addition, dans lequel le signal ambiant général dévié ($S_N$) est soumis, avant la soustraction, à une atténuation (150) variable ($S_{c3}$),

comportant en outre :

- l'obtention (221, 223) d'un signal ambiant général spécial ($S_{N,l}$, $S_{N,r}$) d'un troisième microphone (21, 23) disposé à proximité d'une oreille de la première personne, en particulier plus près de l'oreille de la première personne que le deuxième microphone (12) ;

le traitement du signal de réception ($S_{in}$) destiné à générer le signal audio ($S_{H,l}$, $S_{H,r}$) comportant l'étape suivante :

- soustraction (148, 249) du signal ambiant général spécial ($S_{N,l}$, $S_{N,r}$) du signal d'addition après soustraction du signal ambiant général dévié ($S_{in}$), le signal ambiant spécial ($S_{N,l}$, $S_{N,r}$) étant soumis, avant la soustraction, à une atténuation (254, 255) de préférence variable ($S_{c5}$, $S_{c6}$),
et dans lequel
- la génération du signal audio ($S_{H,l}$, $S_{H,r}$) par le haut-parleur et du signal ambiant général spécial ($S_{N,l}$, $S_{N,r}$) par le troisième microphone est effectuée au moins essentiellement au même endroit, une direction de réception du son du troisième microphone (21, 23) coïncidant au moins essentiellement avec une direction de sortie du son du haut-parleur (18, 29) et
- la caractéristique de réception du son du troisième microphone (21, 23) est adaptée à une caractéristique de réception du son de l'oreille humaine.

2. Procédé selon la revendication 1,
   **caractérisé en ce que**
   le traitement du signal de réception ($S_{in}$) destiné à générer le signal auditif ($S_H$ ; $S_{H,l}$, $S_{H,r}$) comprend les étapes suivantes :

   - dérivation (130) du signal d'émission ($S_{out}$) ;
   - soumission du signal d'émission ($S_{out}$) dévié à une compensation d'écho (146) de préférence variable ($S_{c4}$) pour générer un signal de compensation d'écho ($S_{EC}$) qui correspond à un écho du signal d'émission ($S_{out}$) attendu, contenu dans le signal de réception ($S_{in}$) ; et
   - soustraction (144 ; 244) du signal de compensation d'écho ($S_{EC}$), du signal d'addition ($S_{in}$).

3. Procédé selon la revendication 1 ou la revendication 2,
   **caractérisé en outre en ce que**
   un filtrage du signal ambiant général ($S_N$) à partir du signal vocal ($S_M$) est effectué uniquement en partie de sorte que le signal ambiant général ($S_N$) est transmis en même temps, dans une faible proportion, dans le signal d'émission ($S_{out}$) de sorte que l'au moins une seconde personne peut se régler sur la situation de la première personne, et l'annulation du signal ambiant général ($S_N$) du signal vocal ($S_M$) dans le signal audio ($S_H$ ; $S_{H,l}$, $S_{H,r}$) est limité uniquement à un certain degré de sorte que la première personne ne perd pas entièrement le contact avec l'environnement, l'annulation au moins partielle étant obtenue par la superposition du signal ambiant général ($S_N$) en rotation de phase sur le signal audio ($S_H$ ; $S_{H,l}$, $S_{H,r}$).

4. Procédé selon l'une quelconque des revendications précédentes,
   **caractérisé en ce que**
   l'atténuation variable (122, 150) du signal ambiant général ($S_N$) est réglée automatiquement par une unité de commande, manuellement par la première personne ou par un serveur de conférence externe lorsque le procédé est mis en oeuvre dans un système de conférence.

5. Procédé selon l'une quelconque des revendications précédentes,
   **caractérisé en ce que**
   le signal vocal ($S_M$) et le signal ambiant général ($S_N$) sont générés au moins essentiellement au même endroit, de préférence à proximité de la bouche de la première personne, avec différentes directions de réception du son du premier microphone (10) et du deuxième microphone (12).

6. Procédé selon la revendication 5,
**caractérisé en ce que**,
l'utilisation du signal ambiant général spécial ($S_{N,l}$, $S_{N,r}$) à proximité de l'oreille de la première personne, permet de faire la différence entre un son ambiant qui règne sur un lieu de restitution du haut-parleur (18, 29), c'est-à-dire au niveau de l'oreille de la première personne, et un autre son ambiant sur un lieu d'enregistrement vocal sur lequel le premier microphone (10) enregistre un son vocal de la première personne de telle manière qu'une suppression additive du son ambiant par addition d'un signal ambiant général spécial ($S_N$) inversé ou ayant subi une rotation de phase de 180° peut être optimisée séparément aussi bien pour la seconde personne obtenant le signal d'émission ($S_{out}$) que pour la première personne obtenant le signal audio ($S_{H,l}$, $S_{H,r}$).

7. Procédé selon la revendication 1,
**caractérisé en ce**
**qu'**il est prévu un égaliseur ($E_{ind}(f)$ ; $E_{ind,l}(f)$, $E_{ind,r}(f)$) réalisé spécifiquement pour une oreille gauche et/ou droite de la première personne, une déficience auditive individuelle à un utilisateur, par exemple une déficience auditive d'un porteur d'appareil auditif, étant compensée avec cet égaliseur ($E_{ind}(f)$ ; $E_{ind,l}(f,$ , $E_{ind,r}(f)$) pour augmenter la compréhensibilité des paroles.

8. Procédé selon la revendication 7,
**caractérisé en ce que**,
pour compenser une déficience auditive, spécifique à un utilisateur, de la première personne, le fonctionnement de l'égaliseur ($E_{ind}(f)$ ; $E_{ind,l}(f)$, $E_{ind,r}(f)$) est déterminé par la mesure du spectre auditif de la première personne ou des réponses fréquentielles/courbes de fréquences sont préréglées dans l'égaliseur ($E_{ind}(f)$ ; $E_{ind,i}(f)$, $E_{ind,r}(f)$) de manière que, parmi les réponses fréquentielles/courbes de fréquences préréglées, au moins une réponse fréquentielle/courbe de fréquences peut être sélectionnée par la première personne.

9. Dispositif de commande d'une communication vocale,
**caractérisé en ce que**
le dispositif est conçu et agencé pour réaliser le procédé selon l'une quelconque des revendications précédentes.

10. Utilisation du dispositif selon la revendication 9 pour un module micro-casque sélectionné dans le groupe qui comporte au moins :

     - un casque-micro radio ;
     - un casque-micro ;
     - un casque de camouflage ;
     - un écouteur ;
     - une oreillette dans le sens d'un appareil auditif ; et
     - un agencement microphone-écouteur dans une conférence,

dans lequel le dispositif est intégré dans le module micro-casque ou distinct de cette dernière.

**Fig. 2**

**Fig. 3**

# Fig. 4

400

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012308024 A1